# EUROPEAN PATENT APPLICATION

(11) **EP 4 738 639 A1**
(43) Date of publication of application: **06.05.2026**
(21) Application number: 24831320.7
(22) Date of filing: 22.02.2024
(51) Int. Cl.: H02J 7/00, B60L 3/00, B60L 53/68, G06F 21/57, G16Y 10/40, G16Y 40/50

(54) **CHARGE CONTROL METHOD, CHARGE CONTROL DEVICE, AND PROGRAM**

(30) Priority: 29.06.2023 JP 2023107275
(71) Applicant: Panasonic Intellectual Property Management Co., Ltd., Kadoma-shi, Osaka 571-0057 (JP)
(72) Inventor: TASAKI, Hajime, Kadoma-shi, Osaka 571-8501 (JP); YAMAGUCHI, Takahiro, Kadoma-shi, Osaka 571-8501 (JP); HAGA, Tomoyuki, Kadoma-shi, Osaka 571-8501 (JP)
(74) Representative: Grünecker Patent- und Rechtsanwälte PartG mbB
(86) International application number: PCT/JP2024/006574
(87) International publication number: WO 2025/004440

(57) **Abstract**

A charge control method according to the present disclosure is used in a charge control device communicably connected to a charging facility that includes a charging device for charging an electric vehicle, the charge control method including executing, based on software information including at least firmware information of at least one electronic control device installed in the electric vehicle, determining presence or absence of a security risk in a charging function of the electric vehicle, the security risk being caused by firmware of the at least one electronic control device and determining whether the charging facility can avoid the security risk by restricting a function of the charging device, determining a restricted mode of restricting a function of the charging device based on a determination result of the second determination in a case where a determination result of the first determination indicates presence of the security risk, and controlling charging by the charging device to the electric vehicle in the determined restricted mode.

## Description

### TECHNICAL FIELD

The present disclosure relates to a charge control method, a charge control device, and a program.

### BACKGROUND ART

In the related art, a technology for protecting a plurality of in-vehicle computers such as electronic control units (ECUs) for controlling a vehicle from a security risk affecting vehicle control such as unauthorized communication has been known.

### CITATION LIST

### Patent Literature

Patent Document 1: JP 2018-133721 A
Patent Document 2: JP 2022-037442 A

### SUMMARY OF INVENTION

### PROBLEM TO BE SOLVED BY THE INVENTION

Under such circumstances, a vehicle such as an electric vehicle, which is driven by using electric power from a battery, is connected to a charging facility via, for example, a charge cable for charging. In addition, there is a case where charge control is performed by communication via a charge cable. Therefore, in a case where there is a security risk in the in-vehicle computer, the charging facility may be affected.

An object of the present disclosure is to protect a charging facility connected to an electric vehicle at the time of charging from a security risk caused by the electric vehicle.

### MEANS FOR SOLVING PROBLEM

A charge control method according to one aspect of the present disclosure is used in a charge control device communicably connected to a charging facility that includes a charging device for charging an electric vehicle and a communication network connecting the charging device, the charge control method comprising: executing, based on software information including at least firmware information of at least one electronic control device installed in the electric vehicle, a first determination to determine presence or absence of a security risk in a charging function of the electric vehicle, the security risk being caused by firmware of the at least one electronic control device, and a second determination to determine whether the charging facility can avoid the security risk by restricting a function of the charging device; determining a restricted mode of restricting a function of the charging device based on a determination result of the second determination in a case where a determination result of the first determination indicates presence of the security risk; and controlling charging by the charging device to the electric vehicle in the determined restricted mode.

### EFFECT OF THE INVENTION

According to the present disclosure, it is possible to protect a charging facility connected to an electric vehicle at the time of charging from a security risk caused by the electric vehicle.

### BRIEF DESCRIPTION OF DRAWINGS

FIG. 1 is a diagram illustrating an example of a configuration of a charging system according to the first embodiment;
FIG. 2 is a diagram illustrating an example of a configuration of a charging facility according to the first embodiment;
FIG. 3 is a diagram illustrating an example of a configuration of a charging station management terminal according to the first embodiment;
FIG. 4 is a diagram illustrating an example of a configuration of a charging station management server according to the first embodiment;
FIG. 5 is a diagram illustrating an example of a configuration of a charge control unit according to the first embodiment;
FIG. 6 is a diagram illustrating an example of a configuration of an electric vehicle according to the first embodiment;
FIG. 7 is a diagram illustrating an example of a configuration of a vehicle management server according to the first embodiment;
FIG. 8 is a diagram illustrating an example of vehicle software configuration information according to the first embodiment;
FIG. 9 is a diagram illustrating an example of vehicle management information according to the first embodiment;
FIG. 10A is a flowchart illustrating an example of a charging process in a case where vehicle detection is used as a trigger, the process being executed by the charge control unit according to the first embodiment;
FIG. 10B is a flowchart illustrating an example of a charging process in a case where vehicle detection is used as a trigger, the process being executed by the charge control unit according to the first embodiment;
FIG. 11 is a flowchart illustrating an example of a verification process for reconnecting the charging device to the facility communication network, the process being executed by the charge control unit according to the first embodiment;
FIG. 12 is a sequence diagram illustrating an example of a charging process in a case where vehicle detection is used as a trigger, the process being executed by the charging system according to the first embodiment;
FIG. 13 is a sequence diagram illustrating an example of a verification process for reconnecting the charging device to the facility communication network, the process being executed by the charging system according to the first embodiment;
FIG. 14 is a diagram illustrating an example of a configuration of a charging system according to the second embodiment;
FIG. 15 is a flowchart illustrating an example of a charging process in a case where a charge reservation is used as a trigger, the process being executed by a charge control unit and a reservation management unit according to the third embodiment;
FIG. 16 is a sequence diagram illustrating an example of a charging process in a case where a charge reservation is used as a trigger, the process being executed by the charging system according to the third embodiment;
FIG. 17 is a diagram illustrating an example of a configuration of a charging facility according to the fourth embodiment;
FIG. 18 is a diagram illustrating an example of a configuration of a charge control unit according to the fourth embodiment;
FIG. 19 is a diagram illustrating an example of vehicle software configuration information according to the fourth embodiment;
FIG. 20 is a diagram illustrating an example of vehicle management information according to the fourth embodiment;
FIG. 21 is a diagram illustrating an example of the corresponding function of an ECU related to automatic driving control according to the fourth embodiment;
FIG. 22 is a diagram illustrating an example of the corresponding function of an ECU related to manual driving control according to the fourth embodiment;
FIG. 23 is a flowchart illustrating an example of a charging process in a case where vehicle detection is used as a trigger, the process being executed by a charge control unit according to the fourth embodiment;
FIG. 24 is a sequence diagram illustrating an example of a charging process in a case where vehicle detection is used as a trigger, the process being executed by a charging system according to the fourth embodiment;
FIG. 25 is a flowchart illustrating an example of a charging process in a case where a charge reservation is used as a trigger, the process being executed by a charge control unit and a reservation management unit according to the fifth embodiment; and
FIG. 26 is a sequence diagram illustrating an example of a charging process in a case where a charge reservation is used as a trigger, the process being executed by a charging system according to the fifth embodiment.

### DESCRIPTION OF EMBODIMENTS

Hereinafter, embodiments of a charging system, a charge control method, a charge control device, a program, and a recording medium according to the present disclosure will be described with reference to the drawings.

In the description of the present disclosure, components having the same or substantially the same functions as those described above with respect to the previously described drawings are denoted by the same reference numerals, and the description thereof may be appropriately omitted. In addition, even in the case of representing the same or substantially the same parts, the dimensions and ratios may be represented differently from each other depending on the drawings. Furthermore, for example, from the viewpoint of ensuring visibility of the drawings, in the description of each drawing, only main components are denoted by reference numerals, and even components having the same or substantially the same functions as those described above in the previous drawings may not be denoted by reference numerals.

In the description of the present disclosure, constituent elements having the same or substantially the same function may be distinguished and described by adding alphanumeric characters to the end of reference numerals. Alternatively, in a case where constituent elements having the same or substantially the same function are not distinguished, the constituent elements may be integrated and described by omitting alphanumeric characters added to the end of the reference numerals.

### (First Embodiment)

In the related art, a technology for protecting in-vehicle computers such as electronic control units (ECUs) for controlling a vehicle from a security risk affecting vehicle control such as unauthorized communication has been known.

Under such circumstances, a vehicle driven using electric power from a battery such as an electric vehicle is connected to a charging facility via, for example, a charge cable for charging. In addition, there is a case where charge control is performed by communication via a charge cable. Therefore, in a case where there is a security risk in the in-vehicle computer, the charging facility may be affected.

Therefore, in the present embodiment, a charging system capable of protecting a charging facility connected to an electric vehicle at the time of charging from a security risk caused by the electric vehicle will be described.

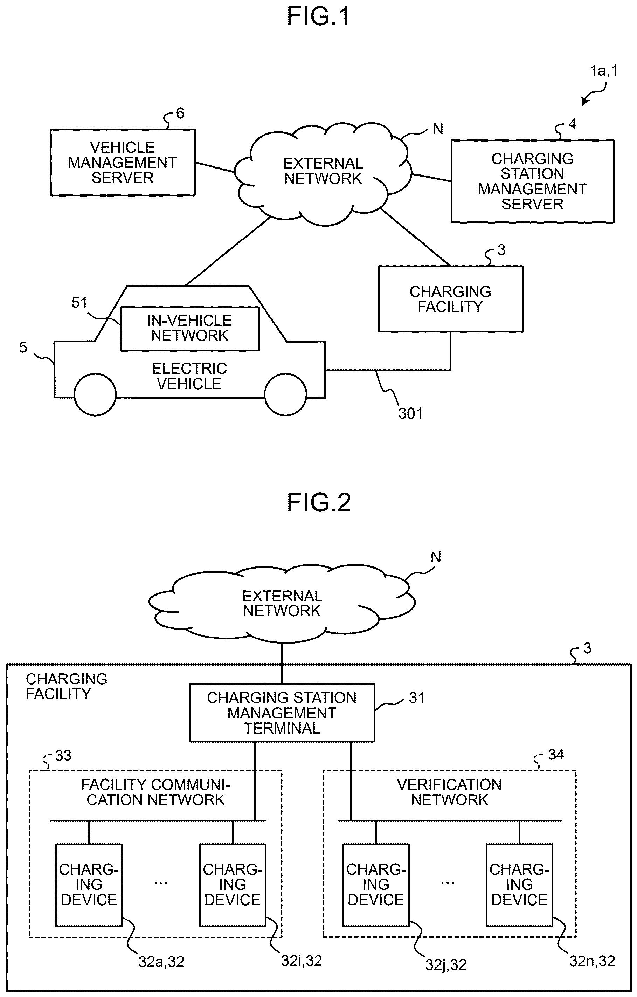

FIG. 1 is a diagram illustrating an example of a configuration of a charging system 1a according to the first embodiment. The charging system 1a includes a charging facility 3, a charging station management server 4, an electric vehicle 5, and a vehicle management server 6. Here, the charging system 1a according to the first embodiment is an example of a charging system 1 according to the embodiment of the present disclosure.

Each of the charging facility 3, the charging station management server 4, the electric vehicle 5, and the vehicle management server 6 is communicably connected to an external network N.

The charging facility 3 is configured to be capable of performing charging for supplying electric power to a battery provided in the electric vehicle 5. The charging facility 3 is installed in a charging station, and provides a charging service to the electric vehicle 5 visiting the charging station. That is, in the present disclosure, the charging station is a facility in which the charging facility 3 is installed and in which charging of the visiting electric vehicle 5 can be performed. The charging station may be installed as a dedicated facility for charging the electric vehicle 5, or may be installed as a facility in which the charging facility 3 is provided in another facility such as a parking lot in which the electric vehicle 5 can be stored.

FIG. 2 is a diagram illustrating an example of a configuration of the charging facility 3 according to the first embodiment. The charging facility 3 includes a charging station management terminal 31 and a plurality of charging devices 32.

FIG. 2 illustrates, as the plurality of charging devices 32, charging devices 32a to 32i connected to a facility communication network 33 and charging devices 32j to 32n connected to a verification network 34. Here, the facility communication network 33 according to the embodiment is an example of a communication network. Note that the number of charging devices 32 provided in the charging facility 3 can be changed as appropriate, and may be one or two or more.

Here, the facility communication network 33 is a network for performing communication between the charging station management terminal 31 and each of the charging devices 32. The verification network 34 is a network disconnected from the facility communication network 33, and is a network for verifying whether the charging device 32 connected to the electric vehicle 5 having a security risk is illegally altered. Note that it is preferable that hardware is physically isolated between the facility communication network 33 and the verification network 34, but a configuration isolated by software can also be used.

The charging station management terminal 31 is connected to the charging station management server 4 via the external network N. The charging station management terminal 31 is connected to each of the charging devices 32 via the facility communication network 33 or the verification network 34.

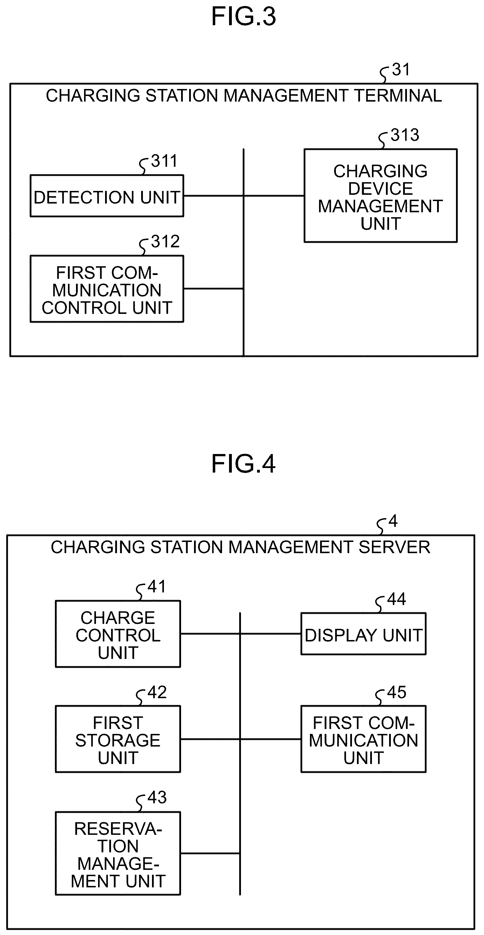

FIG. 3 is a diagram illustrating an example of a configuration of the charging station management terminal 31 according to the first embodiment. The charging station management terminal 31 includes a processor and a memory, and has a hardware configuration using a normal computer. The processor implements a detection unit 311, a first communication control unit 312, and a charging device management unit 313 by executing a program loaded on a memory such as a random access memory (RAM). As the processor, various processors such as a central processing unit (CPU), a graphics processing unit (GPU), an application specific integrated circuit (ASIC), and a field programmable gate array (FPGA) can be used as appropriate. As the memory, various recording media and recording devices such as a RAM, a read only memory (ROM), a hard disk drive (HDD), a solid state drive (SSD), and a flash memory can be used as appropriate.

The detection unit 311 detects the electric vehicle 5 to be charged by the charging station management terminal 31. In a case of detecting the electric vehicle 5 to be charged, the first communication control unit 312 outputs a detection notification to the charging station management server 4. The detection notification includes vehicle identification information for identifying the detected electric vehicle 5.

For example, the detection unit 311 may detect the electric vehicle 5 to be charged based on an image captured in the charging station. For example, the detection unit 311 acquires an image obtained by photographing at least a number plate of the electric vehicle 5 and acquires a number of electric vehicle 5 as vehicle identification information by image analysis, for example, character recognition, on the acquired image. Image analysis on the acquired image may be performed outside the charging station management terminal 31 such as the charging station management server 4. For example, the image analysis may be performed by edge detection processing, or may be performed using a machine learning model such as convolutional neural network (CNN). In the case of using the machine learning model, the parameters of the machine learning model may be determined so as to output the feature amount related to the vehicle according to the input of the image including the vehicle, for example. The feature amount related to the vehicle is, for example, at least any of a shape and a size of the vehicle, a number, and a vehicle body color, but may be other information. Note that the image analysis may be performed using another model of the machine learning model.

Note that the charging system 1a according to the embodiment may further include a camera configured to be capable of photographing at least a number plate of the electric vehicle 5. The camera may be disposed in a charging station in which the charging device 32 is installed, such as the charging device 32 or a vehicle entrance/exit gate of the charging station. Alternatively, the charging system 1a according to the embodiment may be configured to acquire an image from an external camera configured to be able to photograph at least a number plate of the electric vehicle 5. As the external camera, for example, in a case where the charging facility 3 is provided in a parking lot, a monitoring camera provided in an installation place of the charging device 32 or the like can be appropriately used.

In order to obtain an image obtained by photographing at least the number plate of the electric vehicle 5, the camera may be configured to perform photographing, for example, in a case where the electric vehicle 5 is stopped in a predetermined region according to the position of the charging device 32, in a case where the charging device 32 is operated, or in a case where the electric vehicle 5 is connected by a connection member 301. In addition, the charging system 1a may be separately provided with a sensor configured to be able to detect the electric vehicle 5 in a predetermined region according to the position of the charging device 32. In a case where an image obtained by photographing at least a number plate of the electric vehicle 5 is obtained with the connection of the electric vehicle 5 by the connection member 301 as a trigger, it is assumed that power and communication between the electric vehicle 5 and the charging device 32 are cut off at a stage where the electric vehicle 5 is connected by the connection member 301.

Here, the connection member 301 is a member for performing charging from the charging device 32 of the charging facility 3 to the electric vehicle 5 and communication between the charging device 32 and the electric vehicle 5. For example, the charging device 32 and the electric vehicle 5 are detachably connected using a connection member 301. The connection member 301 is configured using elements such as a cable and a connector. The connection member 301 may be a member belonging to either the charging facility 3 or the electric vehicle 5. The charging from the charging device 32 to the electric vehicle 5 and the communication between the charging device 32 and the electric vehicle 5 are implemented by, for example, a common connection member 301, but may be implemented by connection members 301 of different systems. The communication between the charging device 32 and the electric vehicle 5 is not limited to wired communication via the connection member 301, but may be performed by wireless communication. As the wireless communication, communication in various standards such as 4G, 5G, 6G, Wi-Fi (registered trademark), Bluetooth (registered trademark), and infrared communication can be appropriately used.

Furthermore, for example, the detection unit 311 may detect the electric vehicle 5 to be charged based on the fact that the user checks in to the charging station. In this case, the detection unit 311 may acquire the authentication information at the time of checking in as the vehicle identification information. Here, the checking in to the charging station is a process of user authentication performed using a card issued to a user or the like registered in the charging service, an application program installed in a mobile terminal used by the user such as a smartphone, an in-vehicle terminal such as a car navigation system, or the like. The authentication information as the vehicle identification information includes, for example, at least any of user information input at the time of checking in and user information used for authentication at the time of checking in. In addition, the authentication information as the vehicle identification information includes vehicle information for identifying the electric vehicle 5 input by the user at the time of registration to the charging service, at any time point after registration, or at the time of checking in. Note that one user may own a plurality of electric vehicles 5. Therefore, for example, the user can designate the electric vehicle 5 to be charged at the time of checking in, for example.

The charging device management unit 313 operates the charging device 32 to which the electric vehicle 5 is connected in accordance with an instruction from the charging station management server 4.

The charging device management unit 313 restricts the function of the charging facility 3 in accordance with an instruction from the charging station management server 4. For example, the charging device management unit 313 disconnects the target charging device 32 from the facility communication network 33. For example, the charging device management unit 313 connects the target charging device 32 to the verification network 34. For example, the charging device management unit 313 reconnects the target charging device 32 to the facility communication network 33. As an example, in a case where there is no unauthorized alteration in the first verification by a first verification unit 416, the charging device management unit 313 reconnects the charging device 32 to the facility communication network 33. As an example, even in a case where there is an unauthorized alteration in the first verification, the charging device management unit 313 reconnects the charging device 32 to the facility communication network 33 in a case where there is no unauthorized operation in the second verification. In other words, the charging device management unit 313 switches the connection destination of the target charging device 32 between the facility communication network 33 and the verification network 34. For example, the charging device management unit 313 limits the charging speed. For example, the charging device management unit 313 restricts a vehicle communication function of communicating with the electric vehicle 5 via the connection member 301. Here, the restriction of the vehicle communication function is, for example, to restrict communication between the electric vehicle 5 and the outside of the charging system 1a.

Each of the charging devices 32 is detachably connected to the electric vehicle 5 via the connection member 301, and is configured to be capable of performing charging to the connected electric vehicle 5 and communication with the electric vehicle 5. Each of the charging devices 32 includes a communication interface for connecting to the facility communication network 33, a communication interface for connecting to the verification network 34, a connection interface for connecting to the electric vehicle 5 via the connection member 301, a connection interface for connecting to a power supply device or an external power supply, and a control device for controlling the operation of the own device.

The control device of the charging device 32 includes a processor and a memory, and has a hardware configuration using a normal computer. The processor implements each function of the charging device 32, for example, by executing a program loaded on a memory such as a RAM. As the processor, various processors such as a CPU, a GPU, an ASIC, and an FPGA can be used as appropriate. As the memory, various recording media and recording devices such as a RAM, a ROM, an HDD, an SSD, and a flash memory can be appropriately used.

As an example, the charging device 32 feeds power to the electric vehicle 5 connected to the charging device 32 under the control of the charging device management unit 313 of the charging station management terminal 31.

The charging station management server 4 is communicably connected to each of the charging facility 3, the electric vehicle 5, and the vehicle management server 6 via the external network N. The charging station management server 4 is configured to be able to control charging to the electric vehicle 5 by the charging facility 3. The charging station management server 4 is installed, for example, in a place different from the charging station, but may be installed in the charging station as in the charging facility 3. Further, the charging facility 3 and the charging station management server 4 may be integrally configured. Alternatively, for example, some of the functions of the charging station management server 4 such as a charge control unit 41 may be implemented by the charging station management terminal 31 of the charging facility 3. Similarly, some of the functions of the charging station management terminal 31 may be implemented in the charging station management server 4. The charging station management server 4 is operated by, for example, the same business operator as the charging facility 3, but may be operated by a different business operator.

FIG. 4 is a diagram illustrating an example of a configuration of the charging station management server 4 according to the first embodiment. The charging station management server 4 includes the charge control unit 41, a first storage unit 42, a reservation management unit 43, a display unit 44, and a first communication unit 45.

The charging station management server 4 includes a processor and a memory, and has a hardware configuration using a normal computer. The processor implements the charge control unit 41 and the reservation management unit 43 by executing a program loaded on a memory such as a RAM, for example. As the processor, various processors such as a CPU, a GPU, an ASIC, and an FPGA can be used as appropriate. As the memory, various recording media and recording devices such as a RAM, a ROM, an HDD, an SSD, and a flash memory can be appropriately used. Note that the charge control unit 41 and the reservation management unit 43 may have a hardware configuration using a normal computer as independent devices, such as having a processor and a memory.

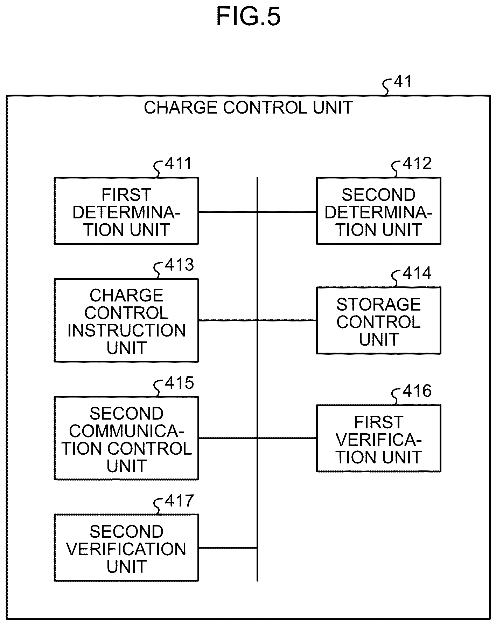

The charge control unit 41 performs charge control based on the security risk of the electric vehicle 5 to be charged. FIG. 5 is a diagram illustrating an example of a configuration of the charge control unit 41 according to the first embodiment. The charge control unit 41 includes a first determination unit 411, a second determination unit 412, a charge control instruction unit 413, a storage control unit 414, a second communication control unit 415, a first verification unit 416, and a second verification unit 417.

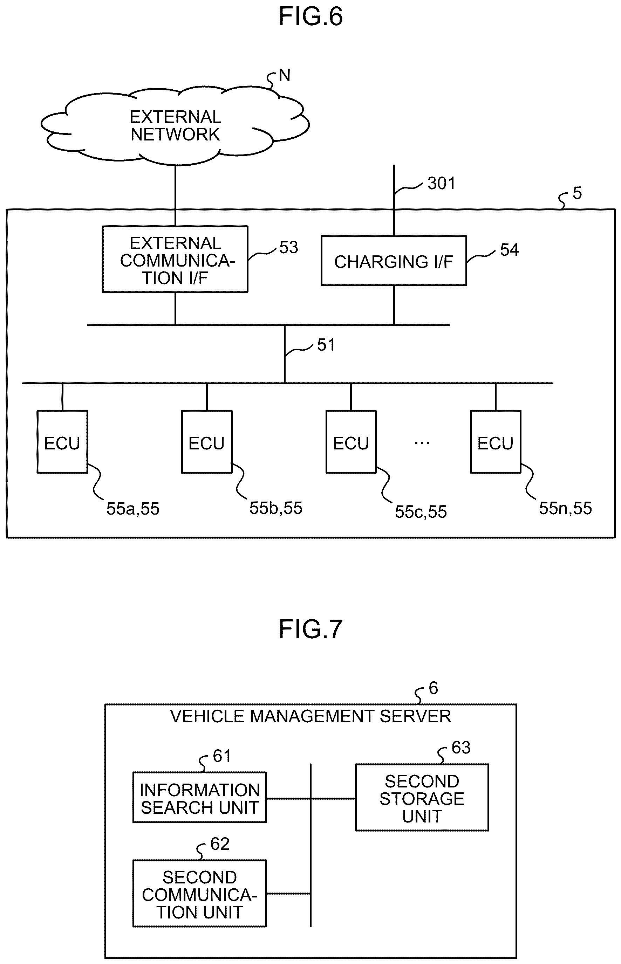

The first determination unit 411 performs a first determination to determine the presence or absence of a security risk or threat to the charging function of the electric vehicle 5. As an example, the first determination includes a determination of the presence or absence of a security risk in the charging function of the electric vehicle 5, the security risk being caused by the FW of the ECU, based on vehicle software configuration information (see FIG. 7) including at least an ECU FW (firmware) version of the ECU onboard the electric vehicle 5.

The second determination unit 412 performs a second determination to determine whether charging is possible and whether it is necessary to avoid a security risk in the charging function. As an example, the second determination includes a determination of whether the security risk of the charging facility 3 can be avoided by restricting the function of the charging device 32 based on the vehicle software configuration information including at least the ECU FW version of the ECU installed in the electric vehicle 5. As an example, the second determination includes a determination as to whether the security risk is the first type of security risk that the charging facility 3 can avoid by disconnecting the charging device 32 from the facility communication network 33.

Note that the first determination unit 411 and the second determination unit 412 may be integrally configured. Here, the first determination unit 411 is an example of a determination unit that performs the first determination. Similarly, second determination unit 412 is an example of a determination unit that performs the second determination.

The charge control instruction unit 413 outputs a charge control instruction according to the determination results of the first determination unit 411 and the second determination unit 412 and the verification results of the first verification unit 416 and the second verification unit 417 to the charging station management terminal 31. Here, the charge control instruction unit 413 is an example of a control unit.

As an example, in a case where the determination result of the first determination indicates that there is a security risk, the charge control instruction unit 413 determines a restricted mode in which the function of the charging device 32 is restricted based on the determination result of the second determination. In addition, the charge control instruction unit 413 controls charging to the electric vehicle 5 by the charging device 32 in the determined restricted mode.

As an example, in a case where the security risk is the first type of security risk such as "malware", the charge control instruction unit 413 controls charging to the electric vehicle 5 in a restricted mode in which the charging device 21 is disconnected from the facility communication network 33.

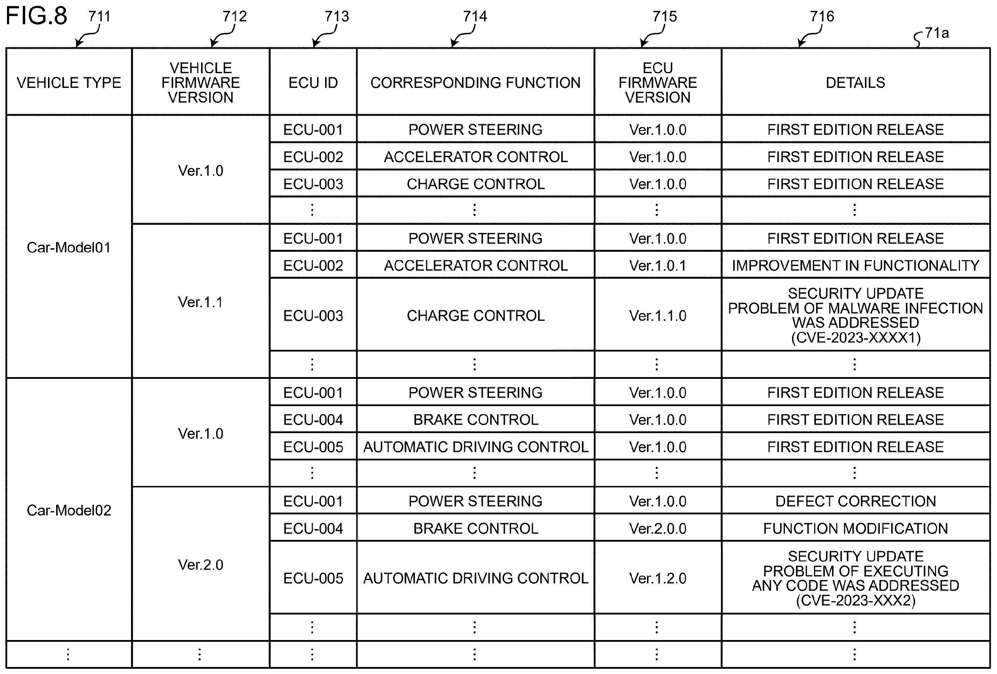

The storage control unit 414 controls the first storage unit 42 and stores various types of information in the first storage unit 42. For example, the storage control unit 414 stores the vehicle software configuration information (see FIG. 7) and the vehicle management information (see FIG. 8) of the target electric vehicle 5 acquired from the vehicle management server 6 in the first storage unit 42.

The second communication control unit 415 controls the first communication unit 45 to communicate with the outside of the charging station management server 4.

The first verification unit 416 and the second verification unit 417 verify whether the charging device 32 can be safely reconnected to the facility communication network 33 after the charging device 32 is disconnected from the facility communication network 33 in order to avoid the security risk of the charging facility 3. For example, the first verification unit 416 performs a memory file system inspection in the target charging device 32 connected to the verification network 34, and determines whether an unauthorized program or the like is altered in the target charging device 32. As an example, the first verification unit 416 performs first verification for verifying the presence or absence of unauthorized alteration in the charging device 32 disconnected from the facility communication network 33. Here, the memory file system inspection is an inspection of a defect of the memory of the charging device 32, and consistency and damage regarding various programs and data such as FW stored in the memory. For example, the second verification unit 417 performs second verification for verifying the presence or absence of unauthorized communication/operation in the target charging device 32 connected to the verification network 34. As an example, in a case where there is an unauthorized alteration in the first verification, the second verification unit 417 further verifies whether there is an unauthorized operation by rolling back the charging device 32. Note that the first verification unit 416 and the second verification unit 417 may be integrally configured.

The first storage unit 42 stores various pieces of data and programs used by the charging station management server 4. As the hardware configuration of the first storage unit 42, various recording media and recording devices such as a ROM, an HDD, an SSD, and a flash memory can be appropriately used. The first storage unit 42 may further be provided with a RAM that temporarily stores data being worked.

The reservation management unit 43 manages a charge reservation made by a driver (user of electric vehicle 5). As an example, the reservation management unit 43 receives a charge reservation from the electric vehicle 5, a mobile terminal used by the driver, or the like via the external network N. In addition, the reservation management unit 43 supplies reservation information about the received charge reservation to the charge control unit 41.

The display unit 44 presents, to the user of the charging station management server 4, information about the charging schedule, a security risk regarding the charging function of the electric vehicle 5, a security risk of the charging facility 3, or information necessary for monitoring charging. As the display unit 44, a liquid crystal display (LCD), an organic electro-luminescence (EL) display, a projector, or the like can be appropriately used. The display unit 44 may be configured as a touch panel display. In this case, the touch panel of the display unit 44 is provided on, for example, the surface of the display unit 44 and outputs information corresponding to the touched position. The touch panel of the display unit 44 is an example of an input interface that acquires an operation input by the user of the charging station management server 4.

Note that the charging station management server 4 may be separately provided with a keyboard or the like as an input interface for acquiring an operation input by the user of the charging station management server 4, not limited to a touch panel.

The first communication unit 45 communicates with the outside of the charging station management server 4 via the external network N. The first communication unit 45 includes a communication circuit for wired or wireless communication as a hardware configuration. As a communication circuit for wireless communication, a communication circuit conforming to various standards such as 4G, 5G, 6G, Wi-Fi (registered trademark), Bluetooth (registered trademark), and infrared communication can be appropriately used.

The electric vehicle 5 is an example of a moving body that is driven using electric power from a battery provided in the electric vehicle 5. The moving body is not limited to an electric vehicle such as a passenger car, a truck, or a two-wheeled vehicle, but an electric bicycle, an electric kickboard, or an electric wheelchair can be appropriately used. In addition, the moving body is not limited to a passenger vehicle, but may be a cargo vehicle such as a cargo carrier. The electric vehicle 5 is communicably connected to each of the charging station management server 4 and the vehicle management server 6 via the external network N. In addition, the electric vehicle 5 is connected to the charging facility 3 via the connection member 301 so as to be able to perform charging and communication.

FIG. 6 is a diagram illustrating an example of a configuration of the electric vehicle 5 according to the first embodiment. The electric vehicle 5 is equipped with an in-vehicle network 51 including a controller area network (CAN), Ethernet (registered trademark), and the like. The electric vehicle 5 includes an external communication interface (I/F) 53, a charging interface (I/F) 54, and a plurality of electronic control units (ECUs) 55. The external communication interface 53, the charging interface 54, and the ECUs 55 are communicably connected to the in-vehicle network 51.

The external communication interface 53 is an interface for performing communication with the outside of the electric vehicle 5 via the external network N. The external communication interface 53 includes a communication circuit conforming to various standards such as 4G, 5G, 6G, Wi-Fi (registered trademark), Bluetooth (registered trademark), and infrared communication.

The charging interface 54 is an interface for connecting to the charging device 32 via the connection member 301. As an example, the charging interface 54 includes a mating member that mates with the connector of the connection member 301.

The ECUs 55 implements control of each function of the electric vehicle 5 such as power steering control, accelerator control, brake control, charge control, and automatic driving control. The control of each function of the electric vehicle 5 is implemented by at least one ECU, and may be implemented, for example, by cooperation of a plurality of ECUs 55. Further, control of a plurality of functions of the electric vehicle 5 may be implemented by a single ECU 55. FIG. 6 illustrates ECUs 55a, 55b, 55c, ..., and 55n as the plurality of ECUs 55. The number of ECUs 55 provided in the electric vehicle 5 can be designed in any manner. Here, each of the ECUs 55 is an example of at least one electronic control device.

The vehicle management server 6 is communicably connected to each of the charging station management server 4 and the electric vehicle 5 via the external network N. The vehicle management server 6 is configured to be able to manage information about the electric vehicle 5. The vehicle management server 6 may be installed in the charging station as in the charging facility 3, may be installed together with the charging station management server 4, or may be installed in a place different from that of the charging station management server 4. Further, the vehicle management server 6 is operated by, for example, a company different from companies of the charging facility 3 and the charging station management server 4, but may be operated by the company same as that of at least one of the charging facility 3 and the charging station management server 4. Further, the charging station management server 4 and the vehicle management server 6 may be integrally configured.

FIG. 7 is a diagram illustrating an example of a configuration of the vehicle management server 6 according to the first embodiment. The vehicle management server 6 includes an information search unit 61, a second communication unit 62, and a second storage unit 63.

The information search unit 61 includes a processor and a memory, and has a hardware configuration using a normal computer. The processor implements each function of the information search unit 61 by executing a program loaded on a memory such as a RAM. As the processor, various processors such as a CPU, a GPU, an ASIC, and an FPGA can be used as appropriate. As the memory, various recording media and recording devices such as a RAM, a ROM, an HDD, an SSD, and a flash memory can be appropriately used.

As an example, the information search unit 61 receives search information such as vehicle identification information from the charging station management server 4 by the second communication unit 62.

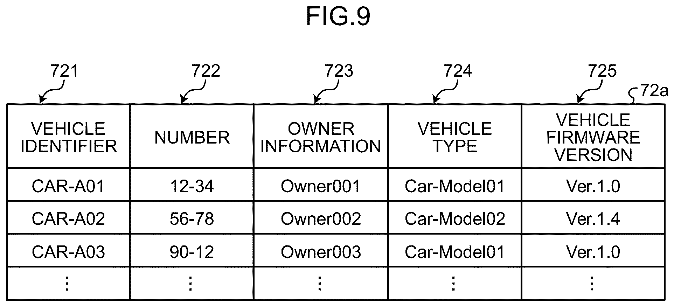

As an example, the information search unit 61 outputs search results such as vehicle software configuration information 71a (see FIG. 8) and vehicle management information 72a (see FIG. 9) about the electric vehicle 5 connected to the charging device 32 by the second communication unit 62 to the charging station management server 4.

As an example, the information search unit 61 is configured to output the vehicle management information 72a of the electric vehicle 5 connected to the charging device 32 and the vehicle software configuration information 71a of the electric vehicle 5 in response to a request from the charging station management server 4. For example, the information search unit 61 outputs the vehicle management information 72a of the electric vehicle 5 corresponding to the vehicle identification information from the charging station management server 4, for example, a vehicle identifier 721, owner information 723, and the like. In addition, the information search unit 61 identifies a vehicle type 724 and a vehicle firmware (FW) version 725 of the electric vehicle 5 connected to the charging device 32 based on the vehicle identification information and the vehicle management information 72a. In addition, the information search unit 61 outputs the vehicle software configuration information 71a corresponding to the identified vehicle type 724 and vehicle FW version 725, for example, an ECU ID 713, a corresponding function 714, an ECU FW version 715, details 716, and the like.

The second communication unit 62 communicates with the outside of the vehicle management server 6 via the external network N. The second communication unit 62 includes a communication circuit for wired or wireless communication as a hardware configuration. As a communication circuit for wireless communication, a communication circuit conforming to various standards such as 4G, 5G, 6G, Wi-Fi (registered trademark), Bluetooth (registered trademark), and infrared communication can be appropriately used.

The second storage unit 63 stores various pieces of data and programs used by the vehicle management server 6. For example, the second storage unit 63 stores the vehicle software configuration information 71a (see FIG. 8) for each vehicle type and the vehicle management information 72a (see FIG. 9) for each vehicle. As the hardware configuration of the second storage unit 63, various recording media and recording devices such as a ROM, an HDD, an SSD, and a flash memory can be appropriately used. The second storage unit 63 may further be provided with a RAM that temporarily stores data being worked.

Note that the vehicle management information 72a may be stored in the first storage unit 42 of the charging station management server 4. In addition, the vehicle management information 72a may store information necessary for establishing communication between the charging device 32 and the electric vehicle 5.

Here, the vehicle software configuration information 71a and the vehicle management information 72a according to the present embodiment will be described with reference to the drawings.

FIG. 8 is a diagram illustrating an example of the vehicle software configuration information 71a according to the first embodiment. The vehicle software configuration information 71a includes items of a vehicle type 711, a vehicle FW version 712, an ECU ID 713, a corresponding function 714 of the ECU, an ECU FW version 715, and details 716. The vehicle software configuration information 71a is information indicating the latest vehicle FW of a certain vehicle type 711, and is information indicating the function and the FW version of each ECU provided in the electric vehicle 5 included in the FW. In addition, the vehicle software configuration information 71a may include update content such as release notes, that can also be used for determining a security risk when the vehicle software configuration information 71a is acquired. Here, the vehicle software configuration information 71a is an example of software information including at least firmware information of the electronic control device. Similarly, the ECU FW version 715 is an example of firmware information for an electronic control device.

In the example of FIG. 8, as the vehicle software configuration information 71a, the vehicle FW versions 712 of "Ver. 1.0" and "Ver. 1.1" related to the vehicle type 711 of the "Car-Model 01" and the vehicle FW versions 712 of "Ver. 1.0" and "Ver. 2.0" related to the vehicle type 711 of the "Car-Model 02" are stored. For example, "Ver. 1.1" of the "Car-Model 01" and "Ver. 2.0" of the" Car-Model 02" are the vehicle FW version 712 indicating the latest FW of each vehicle type. In the example of FIG. 8, with respect to "Ver. 1.1" which is the latest FW of "Car-Model 01", ECU IDs 713 which are information uniquely identifying the related ECUs are "ECU-001", "ECU-002", "ECU-003", etc. The corresponding functions 714 of these ECUs are "power steering", "accelerator control", and "charge control", etc., respectively. ECU FW versions 715 of these ECUs are "Ver. 1.0.0", "Ver. 1.0.1", "Ver. 1.1.0", etc., respectively. In addition, as items of the details 716 of these ECUs, update content such as release notes of "first edition release", "functionality improvement", "security update: a problem of malware infection was addressed (CVW-2023-XXXX1)", etc. is stored.

FIG. 9 is a diagram illustrating an example of the vehicle management information 72a according to the first embodiment. The vehicle management information 72a includes items of a vehicle identifier 721, a number 722, owner information 723, a vehicle type 724, and a vehicle FW version 725. The vehicle management information 72a is information indicating an owner of a certain vehicle and a current version of the vehicle FW. The vehicle management information 72a is collected, for example, at the time of user registration of a charging service by the charging facility 3 or updated at the time of FW update of the electric vehicle 5. In addition, the vehicle management information 72a may include other information such as a vehicle shape, a size, and a vehicle body color of the electric vehicle 5.

In the example of FIG. 9, as the vehicle management information 72a, information about each electric vehicle 5 uniquely identified by each vehicle identifier 721 of "CAR-A01", "CAR-A02", "CAR-A03", etc. is stored. For example, regarding the electric vehicle 5 having the vehicle identifier 721 of "CAR-A01", "12-34", "Owner 001", "Car-Model 01", and "Ver. 1.0" are registered as the number 722 which is the vehicle number displayed on the number plate, the owner information 723 indicating the owner, the vehicle type 724, and the vehicle FW version 725 indicating the vehicle FW currently applied to the electric vehicle 5, respectively. Here, the number 722 of the vehicle management information 72a is an example of the vehicle identification information transmitted from the charging station management server 4 to the vehicle management server 6. Note that another vehicle management information 72a of the number 722 may be used as the vehicle identification information if it can be identified by the vehicle management server 6.

For example, focusing on the electric vehicle 5 with the vehicle identifier 721 of "CAR-A01 ", it can be seen that the latest version of the vehicle FW is "Ver. 1.1" according to the vehicle software configuration information 71a, but the currently applied version is "Ver. 1.0" according to the vehicle management information 72a and is not the latest version. Further, in a case where the vehicle FW of "Ver. 1.0" is applied, the vehicle software configuration information 71a indicates that the corresponding function 714 of "charge control" is before application of the security update and there is a security risk.

Hereinafter, an operation example of the charging system 1a according to the embodiment will be described with reference to the drawings. Note that the processing described below is an example, and it is possible to change the processing order, delete some processing, and add other processing.

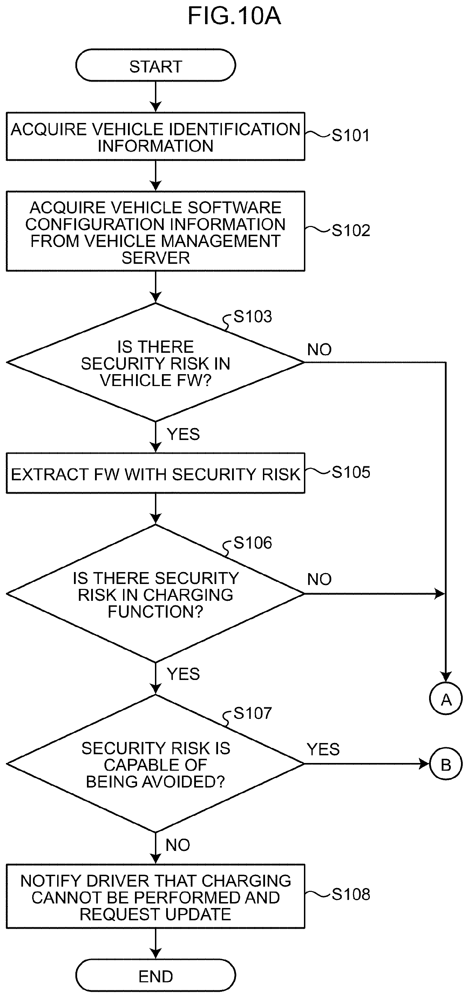

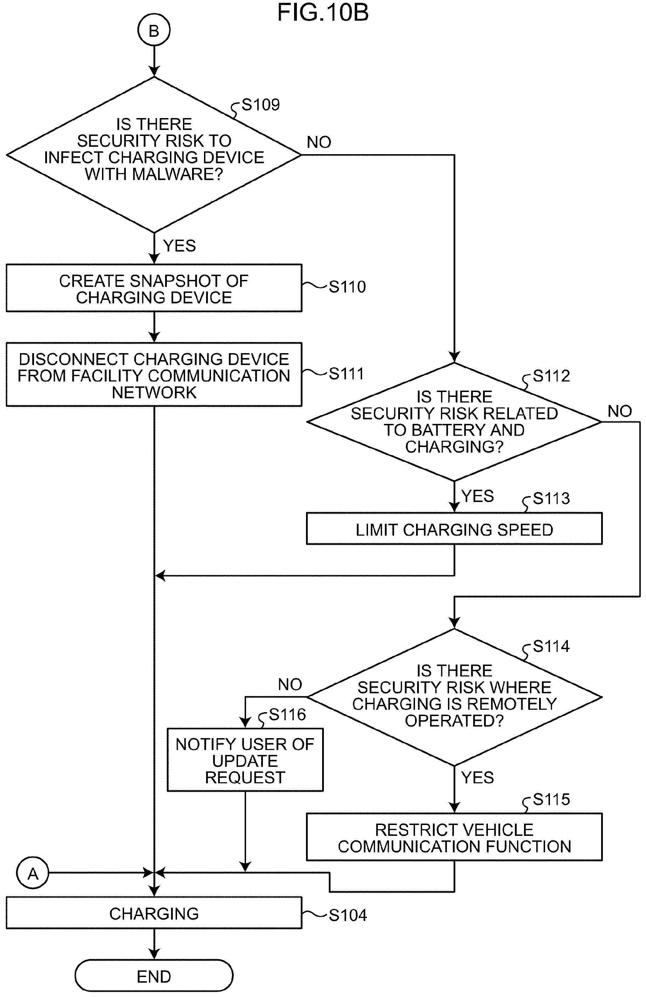

FIGS. 10A and 10B are flowcharts illustrating an example of the charging process in a case where vehicle detection is used as a trigger, the process being executed by the charge control unit 41 according to the first embodiment.

The charge control unit 41 acquires vehicle identification information such as a number of the electric vehicle 5 (S101). As an example, in a case where a camera is provided in the charging station, the charge control unit 41 acquires a number obtained based on an image obtained by photographing the number as the vehicle identification information. As an example, the charge control unit 41 acquires, as vehicle identification information, authentication information when the user of the electric vehicle 5 checks in to the charging station.

The charge control unit 41 outputs the acquired vehicle identification information to the vehicle management server 6 to acquire the vehicle software configuration information 71a and the vehicle management information 72a corresponding to the acquired vehicle identification information from the vehicle management server 6 (S102). As an example, the charge control unit 41 acquires the vehicle management information 72a including at least the vehicle type 724 and the vehicle FW version 725 regarding the electric vehicle 5 to be charged identified by the vehicle management server 6 based on the vehicle identification information and the vehicle management information 72a. In addition, the charge control unit 41 further acquires related information for each of the latest vehicle FW version 712 of the vehicle type 711 to which the electric vehicle 5 to be charged corresponds and the current vehicle FW version 725 based on the vehicle software configuration information 71a.

The charge control unit 41 determines the presence or absence of a security risk in the vehicle FW of the electric vehicle 5 (S103). As an example, regarding the electric vehicle 5 to be charged, the charge control unit 41 determines the presence or absence of a security risk in the vehicle FW of the electric vehicle 5 based on a difference between the latest vehicle FW version 712 of the vehicle type 711 and the vehicle FW version 725 currently applied to the electric vehicle 5. For example, in a case where the latest vehicle FW version 712 of the vehicle type 711 and the currently applied vehicle FW version 725 are different versions, the charge control unit 41 determines that there is a security risk in the vehicle FW of the electric vehicle 5.

In a case where it is determined that there is no security risk in the vehicle FW of the electric vehicle 5 (S103: No), the charge control unit 41 performs charging by the charging device 32 by outputting a charging notification of permitting charging (S104). Thereafter, the procedure of FIGS. 10A and 10B ends.

On the other hand, in a case where it is determined that there is a security risk in the vehicle FW of the electric vehicle 5 (S103: Yes), the charge control unit 41 extracts the FW of the electric vehicle 5 having the security risk (S105). As an example, the charge control unit 41 extracts FW having a security risk based on a difference between the ECU FW versions 715. For example, the charge control unit 41 extracts ECU FW of the ECU 55 having different ECU FW versions 715 between the latest vehicle FW version 712 of the vehicle type 711 and the vehicle FW version 725 currently applied to the electric vehicle 5.

The charge control unit 41 determines the presence or absence of a security risk in the charging function (S106). As an example, in a case where the corresponding function 714 of the extracted ECU FW is a charging function such as "charge control", the charge control unit 41 determines that there is a security risk in the charging function.

In a case where it is determined that there is no security risk in the charging function (S106: No), the procedure of FIGS. 10A and 10B proceeds to the process of S104.

On the other hand, in a case where it is determined that there is a security risk in the charging function (S106: Yes), the charge control unit 41 determines whether the security risk can be avoided (S107). As an example, the charge control unit 41 refers to items in the details 716 between ECU FW having different ECU FW versions 715. The charge control unit 41 determines whether the spread of the damage can be suppressed, that is, whether the charging facility 3 can avoid the security risk, by referring to information about common vulnerabilities and exposures (CVE) and the corresponding content between ECU FW. For example, in a case where the security risk addressed or reported between different ECU FW versions 715 is a security risk such as "malware infection" or "any code can be executed", the charge control unit 41 determines that the security risk can be avoided in the charging facility 3. For example, in a case where the security risk addressed or reported is a security risk such as an attack such as communication inhibition caused between the electric vehicle 5 and the charging device 32, or in a case where the security risk is not known from the description of the item of the details 716, the charge control unit 41 determines that the security risk cannot be avoided in the charging facility 3.

In a case where it is determined that the charging facility 3 cannot avoid the security risk (S107: No), the charge control unit 41 notifies the driver that charging cannot be performed and requests the driver to update the vehicle FW (S108). As an example, the charge control unit 41 transmits a notification that charging cannot be performed and a request for update of the vehicle FW to the charging device 32, the electric vehicle 5, and a mobile terminal (not illustrated) used by the driver via the external network N to present the notification that charging cannot be performed and the request for update of the vehicle FW, thereby notifying the driver of the charging prohibition and the request for update of the vehicle FW. The notification to the driver may be performed by causing a display to display a notification screen, or may be performed by causing a speaker to output a notification sound or a notification voice. Therefore, at least any of a display and a speaker may be provided in the charging device 32. Thereafter, the procedure of FIGS. 10A and 10B ends. Here, disabling the charging by the charging device 32 according to the security risk is an example of a restricted mode of restricting the function of the charging device 32.

On the other hand, in a case where it is determined that the charging facility 3 can avoid the security risk (S107: Yes), the charge control unit 41 determines the presence or absence of the security risk of infecting the charging device 32 with malware (S109). As an example, the charge control unit 41 refers to items of the details 716 between ECU FW having different ECU FW versions 715 different from each other, and determines that there is a security risk of infecting the charging device 32 with malware in a case where the security risk addressed or reported is "malware infection". Here, the security risk of the "malware infection" that has been addressed or reported is an example of the first type of security risk that the charging facility 3 can avoid by disconnecting the charging device 32 from the facility communication network 33.

In a case where it is determined that there is a security risk of infecting the charging device 32 with malware (S109: Yes), the charge control unit 41 creates a snapshot of the charging device 32 (S110). Here, the snapshot of the charging device 32 is information indicating the data state of the memory file system of the charging device 32 at that time, for example, the state of each FW or the version of the control program. Thereafter, the charge control unit 41 holds the created snapshot in the first storage unit 42. In addition, the charge control unit 41 disconnects the connection between the charging device 32 and the facility communication network 33 (S111). As an example, the charge control unit 41 outputs a charging device disconnection instruction for permitting charging under disconnection from the facility communication network 33 to the charging station management terminal 31 via the external network N, thereby performing charging by the charging device 32 in a state where the charging device 32 is disconnected from the facility communication network 33 (S104). Thereafter, the procedure of FIGS. 10A and 10B ends. Here, disconnecting the charging device 32 from the facility communication network 33 according to the security risk and then enabling charging is an example of a restricted mode of restricting the function of the charging device 32.

On the other hand, in a case where it is determined that there is no security risk of infecting the charging device 32 with malware (S109: No), the charge control unit 41 determines the presence or absence of a security risk of the charging facility 3 related to a battery or charging (S112).

In a case where it is determined that there is a security risk regarding the battery and charging (S112: Yes), the charge control unit 41 limits the charging speed (S113). Thereafter, the charge control unit 41 outputs a charging notification of permitting charging to the charging station management terminal 31 under the limitation of the charging speed, thereby performing charging by the charging device 32 while limiting the charging speed (S104). Thereafter, the procedure of FIGS. 10A and 10B ends. Here, limiting the charging speed of the charging device 32 according to the security risk and then enabling charging is an example of a restricted mode of restricting the function of the charging device 32.

On the other hand, in a case where it is determined that there is no security risk related to the battery or charging (S112: No), the charge control unit 41 determines the presence or absence of a security risk of the charging facility 3 in which charging is remotely operated (S114).

In a case where it is determined that there is a security risk where charging is remotely operated (S114: Yes), the charge control unit 41 restricts the vehicle communication function (S115). Thereafter, the charge control unit 41 outputs a charging notification of permitting charging to the charging station management terminal 31 under the restriction of the vehicle communication function, thereby performing charging by the charging device 32 while restricting the vehicle communication function (S104). Thereafter, the procedure of FIGS. 10A and 10B ends. Here, restricting the vehicle communication function of the charging device 32 according to the security risk and then enabling charging is an example of a restricted mode of restricting the function of the charging device 32.

On the other hand, in a case where it is determined that there is no security risk where charging is remotely operated (S114: No), the charge control unit 41 requests the driver to update the vehicle FW, for example, as in the process of S108 (S116). Thereafter, the procedure of FIGS. 10A and 10B proceeds to the process of S104.

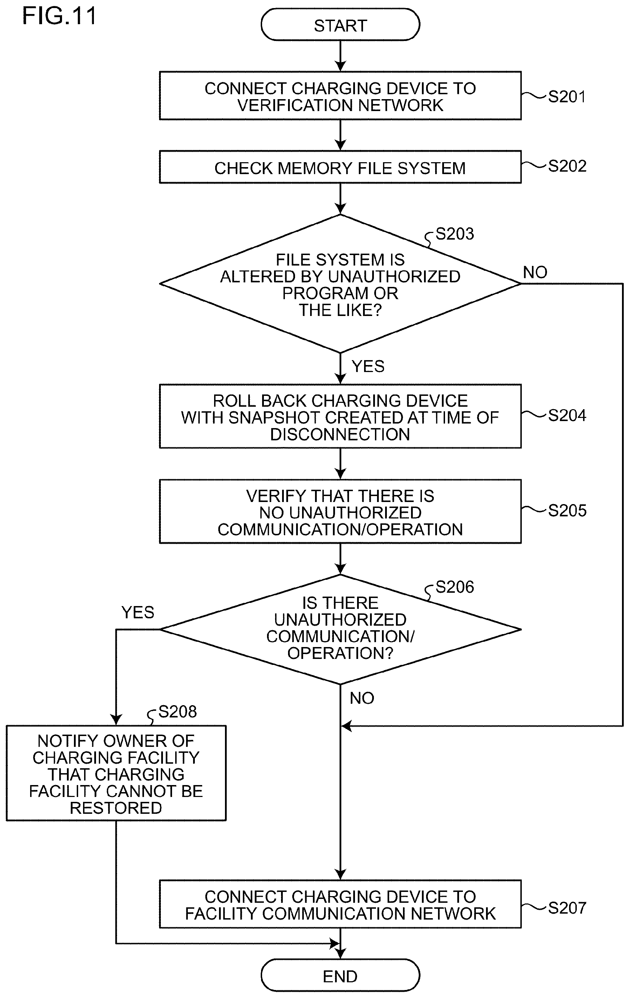

FIG. 11 is a flowchart illustrating an example of the verification process for reconnecting the charging device 32 to the facility communication network 33, the process being executed by the charge control unit 41 according to the first embodiment. The procedure of FIG. 11 is started when, for example, the charging by the charging device 32 disconnected from the facility communication network 33 is completed in the charging process of FIGS. 10A and 10B, as a trigger. The procedure of FIG. 11 may be started when the charging device 32 is not connected to the electric vehicle 5, as a trigger. Alternatively, the procedure of FIG. 11 may be started at any timing after the charging by the charging device 32 is completed or after the charging device 32 is not connected to the electric vehicle 5.

The charge control unit 41 connects the charging device 32 disconnected from the facility communication network 33 to the verification network 34 (S201). As an example, the charge control unit 41 connects the charging device 32 to the verification network 34 by outputting a verification network connection instruction to the charging station management terminal 31 via the external network N.

The charge control unit 41 performs the memory file system inspection in the target charging device 32 connected to the verification network 34 (S202). As an example, the charge control unit 41 inspects a memory failure of the charging device 32 and consistency and damage of a file system in the memory.

The charge control unit 41 determines whether a file system is altered by an unauthorized program or the like (S203). In a case where it is determined that the file system has not been altered by an unauthorized program or the like (S203: No), the procedure of FIG. 11 proceeds to the process of S207.

On the other hand, in a case where it is determined that the file system is altered by an unauthorized program or the like (S203: Yes), the charge control unit 41 rolls back the file system of the charging device 32 using the snapshot created at the time of disconnection (S204).

Thereafter, the charge control unit 41 verifies the presence or absence of unauthorized communication/operation in the target charging device 32 (S205). As an example, the charge control unit 41 causes the charging device 32 to execute a test process and determines whether the communication/operation is a prescribed communication/operation. It is assumed that the verification program for executing the test process and the verification data defining normal communication/operation are predetermined and stored in the first storage unit 42 or the like, for example. For example, the charge control unit 41 supplies the verification program to the charging device 32 and causes the charging device 32 to execute the verification program. For example, the charge control unit 41 acquires the execution result of the verification program, and detects unauthorized communication/operation with reference to the verification data.

The charge control unit 41 determines whether there is unauthorized communication/operation in the target charging device 32 (S206). In a case where it is determined that there is no unauthorized communication/operation in the target charging device 32 (S206: No), the charge control unit 41 connects the charging device 32 to the facility communication network 33 (S207). As an example, the charge control unit 41 outputs a facility communication network connection instruction to the charging station management terminal 31 via the external network N, thereby disconnecting the charging device 32 from the verification network 34 and reconnecting the charging device 32 to the facility communication network 33. On the other hand, in a case where it is determined that there is unauthorized communication/operation in the target charging device 32 (S206: Yes), the charge control unit 41 notifies the owner of the charging facility 3 that the charging device 32 cannot be restored (S208). After the process of S207 or the process of S208, the procedure of FIG. 11 ends.

Here, an operation example of the charging system 1a according to the embodiment will be described more specifically.

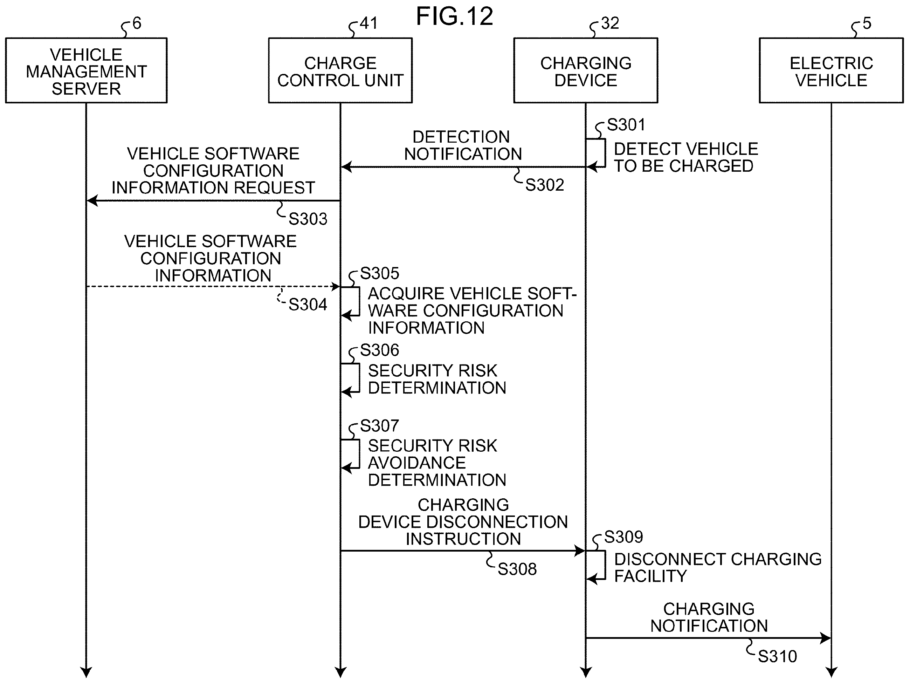

FIG. 12 is a sequence diagram illustrating an example of the charging process in a case where vehicle detection is used as a trigger, the process being executed by the charging system 1a according to the first embodiment. FIG. 12 illustrates the charging process in a case where a security risk exists in the charging function of the electric vehicle 5 to be charged and the charging facility 3 can avoid the security risk.

The charging device 32 of the charging facility 3 detects the electric vehicle 5 to be charged (S301) and outputs a detection notification to the charging station management server 4 in a case where the electric vehicle 5 to be charged is detected (S302). Here, it is assumed that the electric vehicle 5 to which the vehicle identifier 721 of "CAR-A01" is allocated is detected, and a detection notification including the number 722 of "12-34" as the vehicle identification information is output.

The charge control unit 41 of the charging station management server 4 outputs a vehicle software configuration information request for requesting the vehicle software configuration information 71a and the vehicle management information 72a corresponding to the electric vehicle 5 with the number 722 of "12-34", to the vehicle management server 6 (S303).

The information search unit 61 of the vehicle management server 6 refers to the vehicle management information 72a based on the number 722 of "12-34" as the vehicle identification information. Accordingly, the information search unit 61 identifies that the vehicle type 724 of the electric vehicle 5 to be charged is the "Car-Model 01", and the vehicle FW version 725 currently applied is "Ver. 1.0".

Further, the information search unit 61 further refers to the vehicle software configuration information 71a, and reads the vehicle software configuration information 71a for the vehicle type 711 of "Car-Model 01" according to the identified vehicle type 724 of "Car-Model 01". Then, the information search unit 61 outputs the identified vehicle management information 72a and the read vehicle software configuration information 71a to the charging station management server 4 (S304).

The charge control unit 41 of the charging station management server 4 acquires the vehicle software configuration information 71a and the vehicle management information 72a from the vehicle management server 6 (S305).

In the security risk determination (S306), the charge control unit 41 determines that there is a security risk from a difference between "Ver. 1.0", which is the vehicle FW version 725 currently applied to the electric vehicle 5 to which the vehicle identifier 721 of "CAR-A01" is allocated, and "Ver. 1.1", which is the latest vehicle FW version 712 of the vehicle type 711 of "Car-Model 01" read from the vehicle software configuration information 71a. In addition, the charge control unit 41 extracts ECU FW of the corresponding function 714 of "accelerator control" and "charge control" in which there is a difference in the ECU FW version 715 between the vehicle FW versions 725 of "Ver. 1.0" and "Ver. 1.1" for the vehicle type 711 of "Car-Model 01". Then, since ECU FW of the corresponding function 714 of "charge control" is extracted, the charge control unit 41 determines that there is a security risk in the charging function.

In addition, in the security risk avoidance determination (S307), the charge control unit 41 refers to the description of the details 716 between "Ver. 1.0" and "Ver. 1.1" of the vehicle FW versions 725 of the corresponding function 714 of "charge control". Then, since the corresponding security risk between the ECU FW versions 715 of "Ver. 1.0.0" and "Ver. 1.1.0" is the security risk of "malware infection", the charge control unit 41 determines that the security risk is a security risk that the charging facility 3 can avoid and that the ECU FW version 715 of "Ver. 1.0.0" currently applied has the security risk of "malware infection".

Therefore, the charge control unit 41 creates a snapshot of the charging device 32, and outputs a charging device disconnection instruction to instruct charging under disconnection of the charging device 32 from the facility communication network 33 to the charging facility 3 (S308).

The charging device 32 of the charging facility 3 disconnects the target charging device 32 from the facility communication network 33 in response to the charging device disconnection instruction from the charging station management server 4 (S309). The charging device 32 outputs a charging notification to the electric vehicle 5 to perform communication between the charging device 32 and the electric vehicle 5, and starts charging (S310).

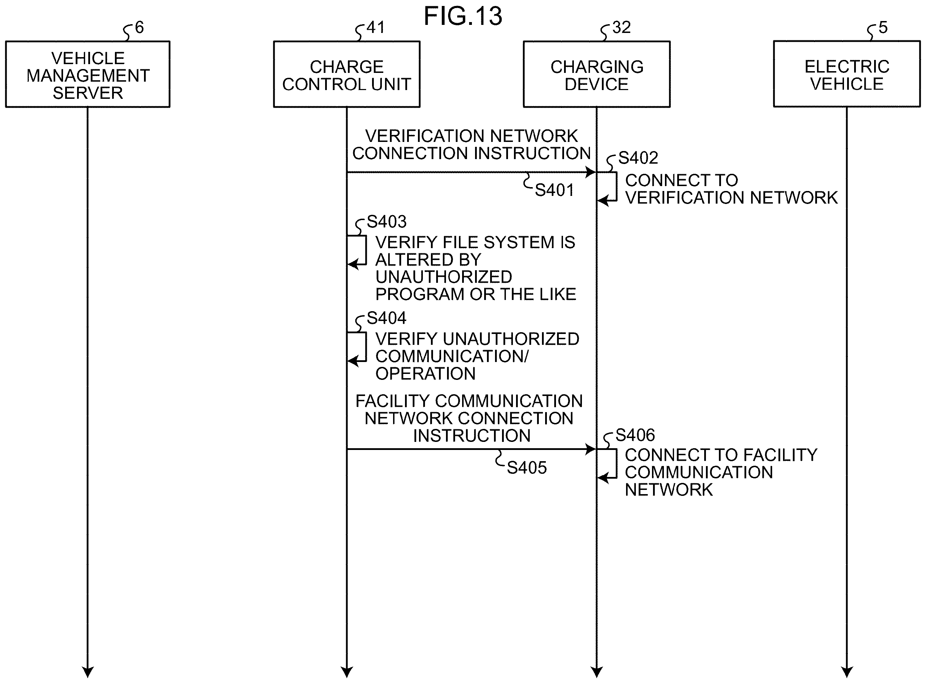

FIG. 13 is a sequence diagram illustrating an example of the verification process for reconnecting the charging device 32 to the facility communication network 33, the process being executed by the charging system 1a according to the first embodiment. FIG. 13 illustrates the verification process in a case where it is determined that there is an unauthorized alteration in the charging device 32 and there is no unauthorized communication/operation by the rollback using the snapshot.

The charge control unit 41 of the charging station management server 4 outputs, to the charging facility 3, a verification network connection instruction instructing connection of the charging device 32 disconnected from the facility communication network 33 in the charging process to the verification network 34 (S401).

The charging device 32 of the charging facility 3 connects the target charging device 32 to the verification network 34 in response to the verification network connection instruction from the charging station management server 4 (S402).

The charge control unit 41 of the charging station management server 4 verifies the file system is altered by an unauthorized program or the like by performing the memory file system inspection in the charging device 32 connected to the verification network 34 (S403). The charge control unit 41 rolls back the file system of the charging device 32 using the snapshot created at the time of disconnection from the facility communication network 33 in the charging process in response to the detection of the unauthorized alteration existing in the charging device 32.

In addition, the charge control unit 41 causes the charging device 32 to execute the verification program, thereby executing a test process of simulating communication/operation, and verifying the presence or absence of unauthorized communication/operation (S404).

In addition, in response to the determination that there is no unauthorized communication/operation, the charge control unit 41 outputs a facility communication network connection instruction for instructing reconnection to the facility communication network 33 of the charging device 32 to the charging facility 3 (S405).

The charging device 32 of the charging facility 3 switches the connection destination of the target charging device 32 from the verification network 34 to the facility communication network 33 in response to the facility communication network connection instruction from the charging station management server 4 (S406).

As described above, the charge control according to the present embodiment includes determining the presence or absence of a security risk in the charging function of the electric vehicle 5 based on the vehicle software configuration information 71a, and determining whether the charging facility 3 can avoid the security risk by restricting the function of the charging device 32. Then, in a case where there is a security risk in the charging function of the electric vehicle 5, the charge control according to the present embodiment includes determining a restricted mode of restricting the function of the charging device 32 based on a determination result as to whether the charging facility 3 can avoid the security risk by restricting the function of the charging device 32.

According to this configuration, the function of the charging device 32 can be restricted according to the security risk in the charging function of the electric vehicle 5. Therefore, according to the charge control according to the embodiment, it is possible to ensure the safety of the charging station without losing as much functionality as possible of the charging station, and to continuously provide power to the moving body to be charged. In other words, the charging facility 3 connected to the electric vehicle 5 at the time of charging can be protected from the security risk caused by the electric vehicle 5.

Hereinafter, another embodiment of a charging system 1 according to the present disclosure will be described with reference to the drawings. Note that, in the following description of each embodiment, differences will be mainly described, and description of content overlapping with the above-described content will be appropriately omitted.

### (Second Embodiment)

A charging system 1b according to the present embodiment is similar to the charging system 1a according to the first embodiment except that a mode of communication between the charging facility 3 and the charging station management server 4 is different. Here, the charging system 1b according to the second embodiment is an example of the charging system 1 according to the embodiment of the present disclosure. In each embodiment of the present disclosure, in a case where the charging system 1a and the charging system 1a are not distinguished from each other, they may be collectively referred to as a charging system 1.

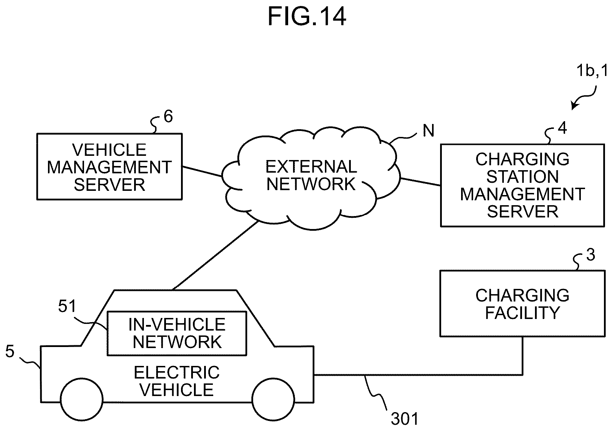

FIG. 14 is a diagram illustrating an example of a configuration of a charging system 1b according to the second embodiment. In the charging system 1b according to the present embodiment, the charging facility 3 is directly connected to the charging station management server 4, without via the external network N.

As described above, even in a configuration in which the charging facility 3 and the charging station management server 4 are connected without via the external network N, the effects same as those of the above-described embodiment can be obtained. In addition, according to this configuration, it is possible to increase the speed and stabilize the communication between the charging facility 3 and the charging station management server 4, and it is possible to improve the safety related to the charge control by limiting the entry path to the charging facility 3 via the external network N.

### (Third Embodiment)

The charging system 1 according to the present embodiment is similar to the charging system 1a according to the first embodiment except that the charging process is started with a charge reservation as a trigger instead of vehicle detection.

When receiving the charge reservation, the reservation management unit 43 according to the present embodiment provides a predetermined waiting time according to the determination result of the security risk determination and/or the security risk avoidance determination. As an example, in a case where there is a security risk and in a case where the charging facility 3 can avoid the security risk, the reservation management unit 43 sets a reservation time at which charging is started with a predetermined waiting time provided. Here, the reservation management unit 43 according to the embodiment is an example of a control unit.

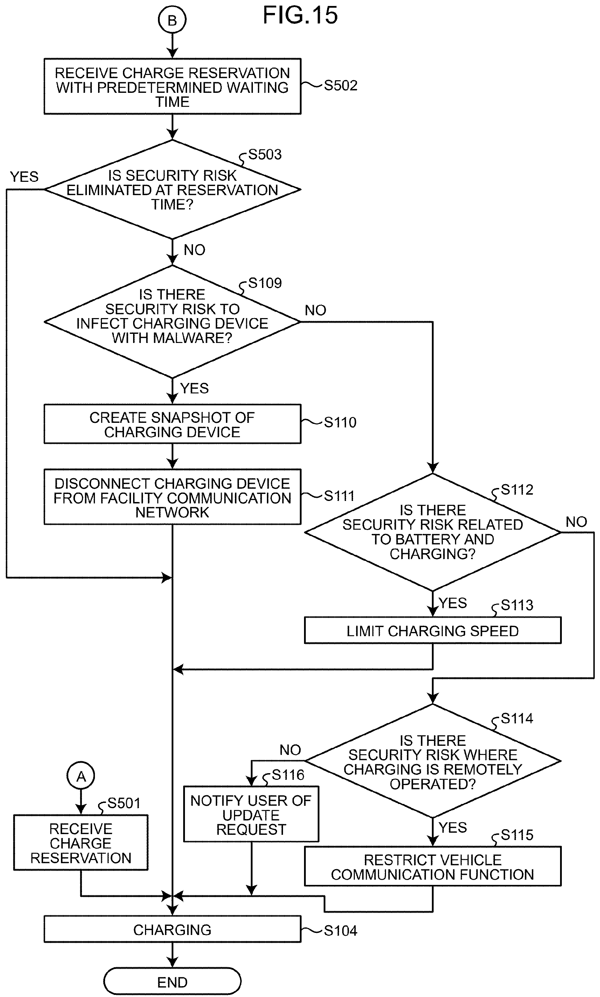

FIGS. 10A and 15 are flowcharts illustrating an example of the charging process in a case where the charge reservation is used as a trigger, the process being executed by the charge control unit 41 and the reservation management unit 43 according to the third embodiment. Here, differences from the charging process (see FIGS. 10A and 10B) according to the first embodiment will be mainly described.

In the procedure of FIGS. 10A and 15, the charge control unit 41 acquires vehicle identification information such as the owner information 723 and the vehicle type 724 (S101). As an example, the charge control unit 41 acquires the vehicle identification information based on the reservation information in the charge reservation registration including at least the owner information 723 and the vehicle type 724. The reservation information can be acquired based on, for example, information input by the user of the electric vehicle 5 in the charge reservation registration and authentication information when the user logs in the charge reservation registration service.

Further, in the procedure of FIGS. 10A and 15, in a case where it is determined that there is no security risk in the vehicle FW of the electric vehicle 5 (S103: No), the charge control unit 41 performs charging by the charging device 32 by outputting a charging notification of permitting charging after the reservation management unit 43 receives the charge reservation (S501) (S104).

In addition, in the procedure of FIGS. 10A and 15, in a case where it is determined that there is no security risk in the charging function (S106: No), the reservation management unit 43 receives the charge reservation (S501), and then the process proceeds to S104.

In addition, in the procedure of FIGS. 10A and 15, in a case where it is determined that the security risk can be avoided in the charging facility 3 (S107: Yes), the reservation management unit 43 provides a predetermined waiting time and receives the charge reservation (S502). As an example, unlike the case where there is no security risk (S501), the reservation management unit 43 receives the charge reservation at the reservation time with a predetermined waiting time provided such as 30 minutes, for example. Note that the predetermined waiting time is assumed to be predetermined and stored in the first storage unit 42 or the like, for example. At this time, the charge control unit 41 may make an update request for requesting the driver to update the vehicle FW. Here, the reservation time according to the embodiment is an example of the charging time.

When the reservation time comes, the charge control unit 41 determines whether the security risk in the charging function has been eliminated (S503). As an example, the charge control unit 41 determines the presence or absence of a security risk in the charging function based on the vehicle FW version 725 applied to the electric vehicle 5 to be charged at the reservation time, for example, in a manner similar to the process of S102 to S106. In a case where it is determined that the security risk in the charging function has been eliminated (S503: Yes), the procedure of FIGS. 10A and 15 proceeds to the process of S104. On the other hand, in a case where it is not determined that the security risk in the charging function has been eliminated (S503: No), the procedure of FIGS. 10A and 15 proceeds to the process of S109.

As described above, the charge control unit 41 according to the present embodiment performs the first determination again by the reservation time, and, in a case where the determination result of the first determination indicates that there is no security risk by the reservation time, controls charging to the electric vehicle 5 without restricting the function of the charging device 32. Further, in a case where the determination result of the first determination does not indicate that there is no security risk by the reservation time, the charge control unit 41 controls the charging to the electric vehicle 5 in the restricted mode in which the charging device 32 is disconnected from the facility communication network 33.

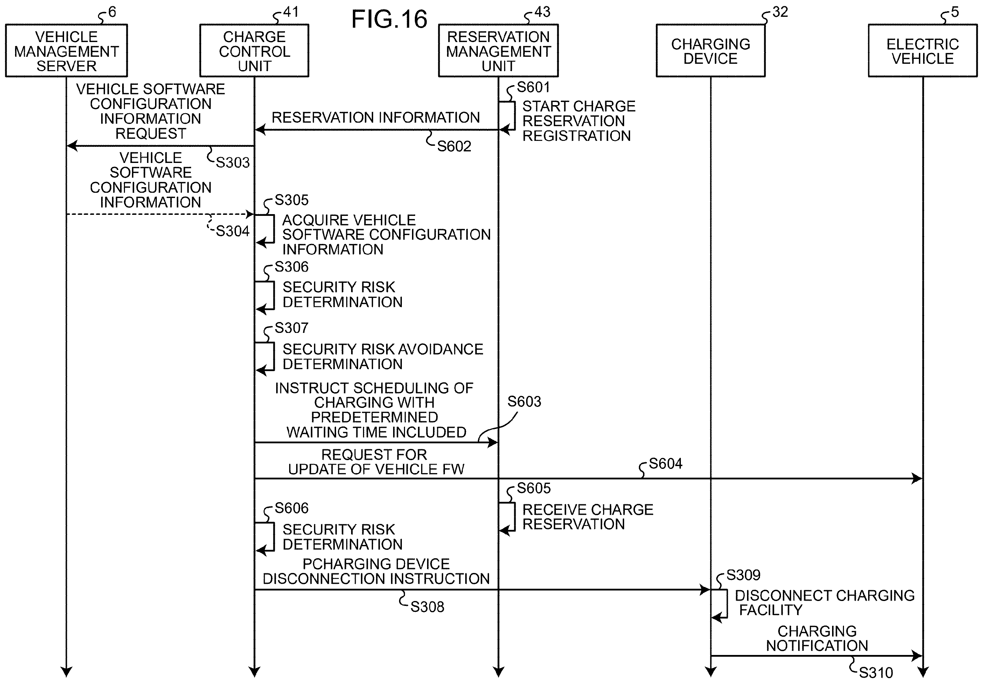

FIG. 16 is a sequence diagram illustrating an example of the charging process in a case where the charge reservation is used as a trigger, the process being executed by the charging system 1 according to the third embodiment. FIG. 16 illustrates the charging process in a case where a security risk exists in the charging function of the electric vehicle 5 to be charged and the security risk can be avoided in the charging facility 3 and the security risk in the charging function is not eliminated at the reservation time. Here, differences from the charging process (see FIG. 12) according to the first embodiment will be mainly described.

The reservation management unit 43 starts the charge reservation registration (S601). In addition, the reservation management unit 43 acquires reservation information including at least the owner information 723 and the vehicle type 724 based on information input by the user of the electric vehicle 5 and authentication information when the user logs in the charge reservation registration service and outputs the reservation information to the charge control unit 41 (S602). Here, it is assumed that reservation information including the owner information 723 of "Owner 001" and the vehicle type 724 of "Car-Model 01" is output.

The charge control unit 41 of the charging station management server 4 outputs a vehicle software configuration information request for requesting the vehicle software configuration information 71a and the vehicle management information 72a corresponding to the owner information 723 of "Owner 001" and the vehicle type 724 of "Car-Model 01", to the vehicle management server 6 (S303).

The information search unit 61 of the vehicle management server 6 refers to the vehicle management information 72a based on the owner information 723 of "Owner 001" and the vehicle type 724 of "Car-Model 01" as the vehicle identification information. Accordingly, the information search unit 61 identifies that the vehicle FW version 725 currently applied to the electric vehicle 5 to be charged is "Ver. 1.0".

After the security risk avoidance determination (S307), the charge control unit 41 instructs the reservation management unit 43 to schedule charging with a predetermined waiting time included in response to the determination that there is a security risk of "malware infection" for the charging function (S603). In addition, the charge control unit 41 may request the driver to update the vehicle FW during a predetermined waiting time provided before the reservation time by outputting a request for update of the vehicle FW to the electric vehicle 5 (S604).

In response to an instruction from the charge control unit 41, the reservation management unit 43 receives a charge reservation at a reservation time with a predetermined waiting time provided (S605). In addition, when the reservation time comes, the charge control unit 41 determines whether the security risk in the charging function has been eliminated (S606), and in response to the determination that the security risk in the charging function has not been eliminated, instructs the creation of a snapshot of the charging device 32 and the disconnection from the facility communication network 33 (S308).

As described above, the charging system 1 according to the present embodiment performs the charging process with the charge reservation as a trigger, and sets the reservation time with a waiting time in a case where it is determined that there is a security risk in the charging function. According to this configuration, in addition to the effect similar to that of the above-described embodiment, an effect that the vehicle FW can be updated during the waiting time until the reservation time can be obtained. Therefore, according to the charging system 1 according to the present embodiment, the safety of the charge control can be further improved.

Note that the waiting time provided at the time of charge reservation may be a predetermined constant time, or may be varied according to the determination result of the security risk, such as increasing the waiting time in a case where the charging speed is limited according to the security risk in the charging function. In addition, the length of the waiting time may be varied according to the number of ECU FW to be updated, the data amount, and the prediction time required for the update regarding the update to the latest vehicle FW applicable to the electric vehicle 5 to be charged. According to this configuration, since the vehicle FW can be easily updated during the waiting time until the reservation time, the safety of the charge control can be further improved.

Note that the technology according to the present embodiment can be appropriately applied to the charging system 1 according to each of the above-described embodiments.

### (Fourth Embodiment)

In a case where the latest update patch is not applied to the in-vehicle computer, there is a possibility that the safety of the vehicle and the driver is threatened, for example, the security risk for which countermeasures are not taken is abused to illegally operate the function of the vehicle.

Therefore, in the present embodiment, the charging system 1 will be described, which is capable of protecting an electric vehicle connected to a charging facility at the time of charging from a security risk caused by the electric vehicle.

The charging system 1 according to the present embodiment is similar to the charging system 1a according to the first embodiment except that the charge control according to the security risk in the traveling function is performed instead of the security risk in the charging function in the electric vehicle 5 to be charged. In the present embodiment, differences from the charging system 1a according to the first embodiment will be mainly described.

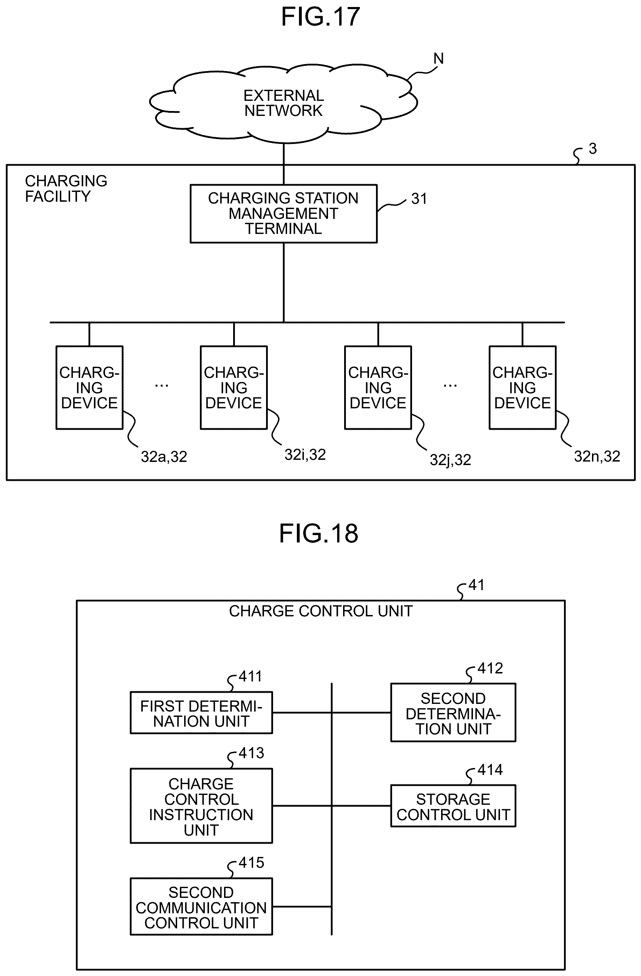

FIG. 17 is a diagram illustrating an example of a configuration of the charging facility 3 according to the fourth embodiment. The charging facility 3 according to the present embodiment is similar to the charging facility 3 according to the first embodiment (see FIG. 2) except that the facility communication network 33 and the verification network 34 are not provided. Specifically, in the charging facility 3 according to the present embodiment, the charging station management terminal 31 is connected to each of the charging devices 32 via one network.

FIG. 18 is a diagram illustrating an example of a configuration of the charge control unit 41 according to the fourth embodiment. The charge control unit 41 according to the present embodiment is different from the charge control unit 41 according to the first embodiment (see FIG. 5) in that the first verification unit 416 and the second verification unit 417 are not provided. Here, each of the first determination unit 411 and the second determination unit 412 according to the present embodiment is an example of the determination unit. Similarly, the charge control instruction unit 413 according to the present embodiment is an example of the control unit.

In addition, the first determination unit 411 and the second determination unit 412 according to the present embodiment determine a security risk in the traveling function instead of the security risk in the charging function according to the first embodiment. As an example, the first determination unit 411 performs a first determination to determine the presence or absence of a security risk in the traveling function of the electric vehicle 5, the security risk being caused by the FW of the ECU 55. As an example, in a case where the determination result of the first determination indicates that there is a security risk, the second determination unit 412 performs a second determination as to whether the electric vehicle 5 to be charged can travel with another traveling function after disabling at least one traveling function having the security risk, and whether the electric vehicle 5 can avoid the security risk. That is, the first determination according to the present embodiment includes a determination of the presence or absence of a security risk in at least one traveling function of the electric vehicle 5, the security risk being caused by the FW of at least one ECU 55. Further, the second determination according to the present embodiment includes a determination as to whether the electric vehicle 5 to be charged can avoid a security risk by disabling a predetermined function in a case where the predetermined function in at least one traveling function of the electric vehicle 5 has the security risk.

The charge control instruction unit 413 outputs a charge control instruction according to the determination results of the first determination unit 411 and the second determination unit 412 to the electric vehicle 5 to be charged in addition to the charging station management terminal 31. As an example, in a case where the electric vehicle 5 can travel with another traveling function after disabling at least one traveling function having a security risk and the electric vehicle 5 can avoid the security risk, the charge control instruction unit 413 permits charging to the electric vehicle 5 after disabling at least one traveling function having the security risk. As an example, in a case where the electric vehicle 5 to be charged can travel with another traveling function after disabling at least one traveling function having a security risk and the electric vehicle 5 can avoid the security risk, the charge control instruction unit 413 outputs notification information for checking with the driver whether at least one traveling function having the security risk is disabled. As an example, in a case of acquiring notification information indicating the consent of the driver about disabling at least one traveling function having a security risk, the charge control instruction unit 413 outputs instruction information for disabling at least one traveling function having a security risk to the electric vehicle 5.

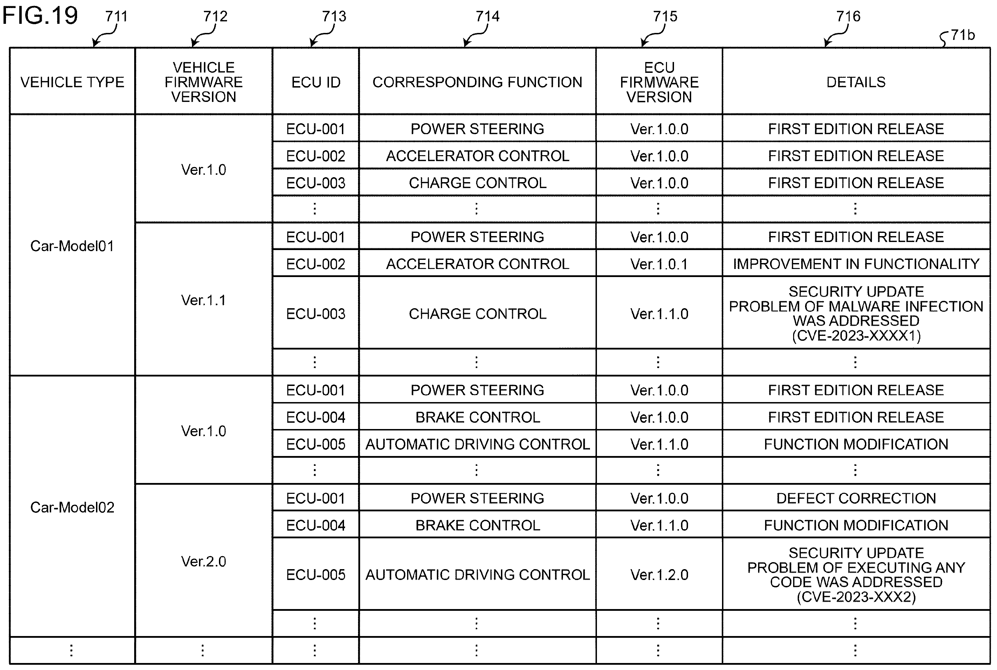

FIG. 19 is a diagram illustrating an example of vehicle software configuration information 71b according to the fourth embodiment. The vehicle software configuration information 71b illustrated in FIG. 19 is similar to the vehicle software configuration information 71a illustrated in FIG. 8, except that the ECU FW version 715 regarding the vehicle type 711 of "Car-Model 02" is different.

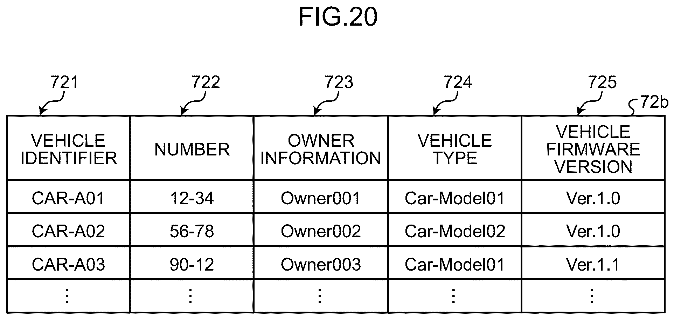

FIG. 20 is a diagram illustrating an example of a vehicle management information 72b according to the fourth embodiment. The vehicle management information 72b illustrated in FIG. 20 is similar to the vehicle management information 72a illustrated in FIG. 9 except that the vehicle FW version 725 related to the electric vehicle 5 of the vehicle identifiers 721 of "CAR-A02" and "CAR-A03" is different.

Here, an outline of the charge control according to the security risk in the traveling function, the charge control being executed by the charging system 1 according to the present embodiment, will be described with reference to the drawings.

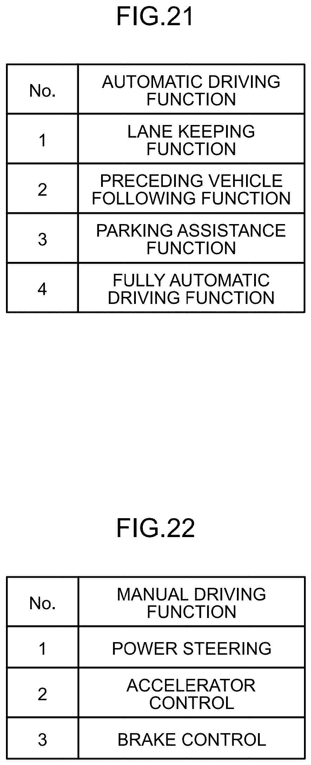

FIG. 21 is a diagram illustrating an example of the corresponding function 714 of the ECU 55 related to automatic driving control according to the fourth embodiment. In a case where a security risk in a traveling function related to automatic driving, such as a lane keeping function (No. 1), a preceding vehicle following function (No. 2), a parking assistance function (No. 3), and a fully automatic driving function (No. 4) among the corresponding functions 714 of the ECU 55, that is, in the automatic driving function, exists in the electric vehicle 5 to be charged, the charge control unit 41 according to the present embodiment performs charge control to restrict the automatic driving according to the security risk. As an example, in a case where there is a security risk in at least one of the automatic driving functions No. 1 to No. 3, the charge control unit 41 restricts the function and the fully automatic driving function of No. 4 having a higher level. As an example, in a case where there is a security risk in the automatic driving function No. 4, the charge control unit 41 restricts only the fully automatic driving function (No. 4). For example, the restriction is based on the fact that the automatic driving functions No. 1 to No. 3 are independent functions, while the fully automatic driving function (No. 4) is a function including the automatic driving functions No. 1 to No. 3. The level allocated to each automatic driving function can be changed as appropriate.

FIG. 22 is a diagram illustrating an example of the corresponding function 714 of the ECU 55 related to the manual driving control according to the fourth embodiment. In a case where a security risk in a traveling function related to manual driving, such as power steering (No. 1), accelerator control (No. 2), and brake control (No. 3) among the corresponding function 714 of the ECU 55, that is, in a manual driving function, exists in the electric vehicle 5 to be charged, the charge control unit 41 according to the present embodiment performs charge control to restrict manual driving according to the security risk. As an example, in a case where there is a security risk in any of the manual driving functions No. 1 to No. 3, the charge control unit 41 restricts the manual driving. For example, the restriction is based on the fact that each of the manual driving functions No. 1 to No. 3 is a traveling function required for manual driving.

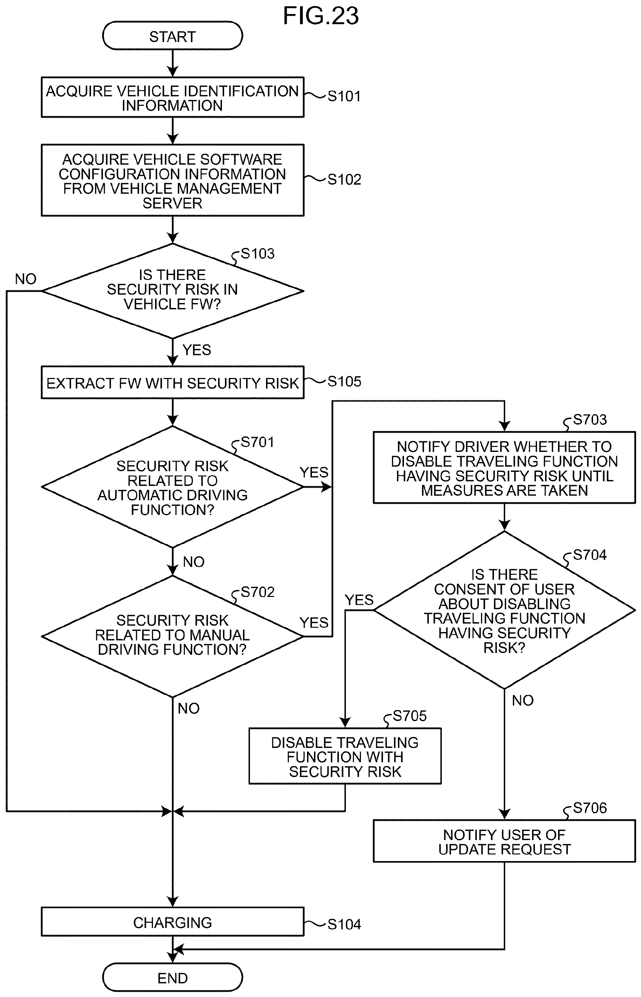

FIG. 23 is a flowchart illustrating an example of the charging process in a case where vehicle detection is used as a trigger, the process being executed by the charge control unit 41 according to the fourth embodiment. Here, differences from the charging process (see FIGS. 10A and 10B) according to the first embodiment will be mainly described.

In the procedure of FIG. 23, after extracting the FW having a security risk (S105), the charge control unit 41 determines whether the corresponding function 714 of the extracted FW includes a security risk related to the automatic driving function (S701). As an example, in a case where the corresponding function 714 of the extracted ECU FW is a traveling function such as "automatic driving control", the charge control unit 41 determines that the function includes a security risk related to the automatic driving function.

In a case where it is determined that the function does not include a security risk related to the automatic driving function (S701: No), the charge control unit 41 determines whether the corresponding function 714 of the extracted FW is a security risk related to the manual driving function (S702). As an example, in a case where the corresponding function 714 of the extracted ECU FW is a traveling function such as "power steering", "accelerator control", and "brake control", the charge control unit 41 determines that the function includes a security risk related to the manual driving function.

In a case where it is determined that the security risk is not related to the manual driving function (S702: No), the procedure of FIG. 23 proceeds to the process of S104.

On the other hand, in a case where it is determined that the function includes a security risk related to the automatic driving function or the manual driving function (S701: Yes, S702: Yes), the charge control unit 41 notifies the driver of a consent confirmation as to whether to disable (restrict) at least one traveling function having the security risk until measures such as updating of the vehicle FW are taken (S703). Here, it is assumed that at least one traveling function having a security risk is an automatic driving function or a manual driving function determined to have a security risk.

The charge control unit 41 determines whether there is consent of the user of the electric vehicle 5 about disabling the automatic driving function or the manual driving function (S704). In a case where it is determined that there is consent of the user about disabling the automatic driving function or the manual driving function (S704: Yes), the charge control unit 41 disables the automatic driving function or the manual driving function that the user has agreed to disable (S705). Thereafter, the procedure of FIG. 23 proceeds to the process of S104.

On the other hand, in a case where it is determined that there is no consent of the user of the electric vehicle 5 about disabling the automatic driving function or the manual driving function (S704: No), the charge control unit 41 requests the user to update the vehicle FW (S706). Thereafter, the procedure of FIG. 23 ends.

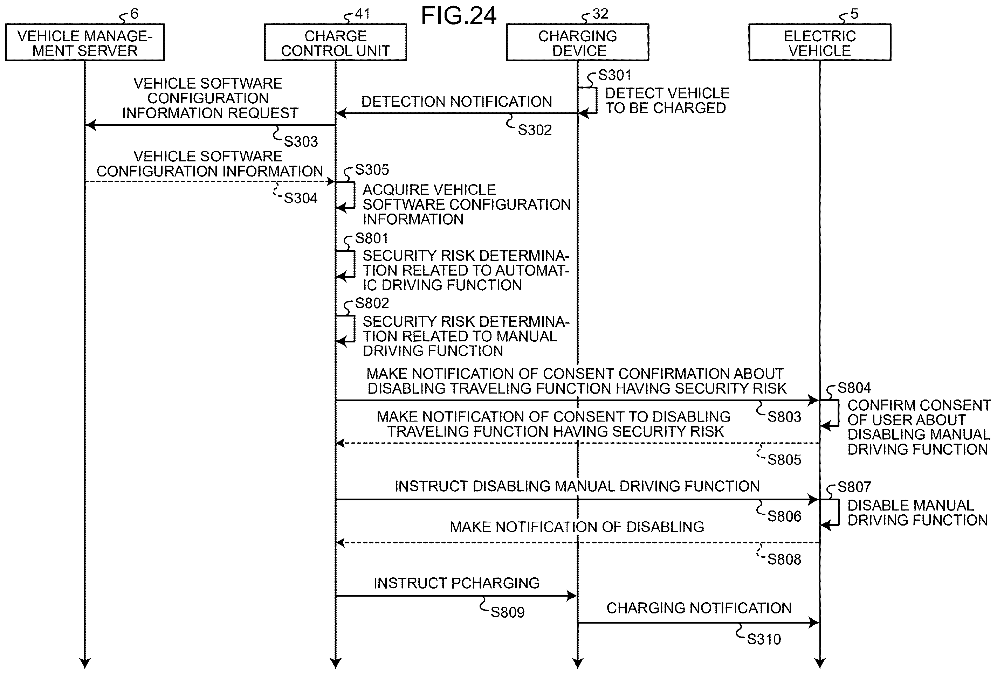

FIG. 24 is a sequence diagram illustrating an example of the charging process in a case where vehicle detection is used as a trigger, the process being executed by the charging system 1 according to the fourth embodiment. FIG. 24 illustrates the charging process in a case where there is a security risk in the manual driving function and the automatic driving function that are installed in the electric vehicle 5 to be charged, and the consent of the driver about disabling the manual driving function is obtained. Here, differences from the charging process (see FIG. 12) according to the first embodiment will be mainly described.

After acquiring the vehicle software configuration information 71b and the vehicle management information 72b from the vehicle management server 6 (S305), the charge control unit 41 of the charging station management server 4 performs the security risk determination related to the automatic driving function (S801) and the security risk determination related to the automatic driving function (S802). Here, it is assumed that the vehicle type 724 of the electric vehicle 5 to be charged is "Car-Model 02", and the vehicle FW version 725 currently applied is "Ver. 1.0".

In the security risk determination related to the automatic driving function (S801) and the security risk determination related to the manual driving function (S802), the charge control unit 41 determines that there is a security risk from a difference between "Ver. 1.0", which is the vehicle FW version 725 currently applied to the electric vehicle 5 to be charged, and "Ver. 2.0", which is the latest vehicle FW version 712 of the vehicle type 711 of "Car-Model 02" read from the vehicle software configuration information 71b. In addition, the charge control unit 41 extracts ECU FW of the corresponding function 714 of "automatic driving control" and "brake control" in which there is a difference in the ECU FW version 715 between the vehicle FW versions 725 of "Ver. 1.0" and of "Ver. 2.0" for the vehicle type 711 of "Car-Model 02". Then, since ECU FW of the corresponding function 714 of "automatic driving control" and "brake control" is extracted, the charge control unit 41 determines that there is a security risk in the automatic driving function and the manual driving function.

The charge control unit 41 of the charging station management server 4 outputs a notification of a consent confirmation about disabling the traveling function having a security risk to the electric vehicle 5 (S803). Here, the notification of the consent confirmation according to the present embodiment is an example of notification information. The ECU 55 that controls the in-vehicle display or the in-vehicle speaker of the electric vehicle 5 confirms consent of the user of the electric vehicle 5 about disabling the traveling function having the security risk (S804). As an example, the ECU 55 displays a confirmation screen or outputs a confirmation voice for confirming consent of the user. With the consent of the driver about disabling the manual driving function, the ECU 55 outputs, to the charging station management server 4, a notification of consent to disabling the traveling function having a security risk indicating consent to disabling the manual driving function (S805). The notification of the agreement to disable the traveling function having the security risk is an example of the notification information. Note that the consent confirmation is not limited to the case of being output to the electric vehicle 5, and may be performed using a mobile terminal used by a driver such as a smartphone, or a display or a speaker provided in the charging device 32.

The charge control unit 41 of the charging station management server 4 outputs an instruction to disable the manual driving function to the electric vehicle 5 in accordance with the consent of the driver about disabling the manual driving function (S806). Here, the instruction to disable the manual driving function according to the present embodiment is an example of instruction information for disabling at least one traveling function having a security risk. Further, the ECU 55 to which the ECU ID 713 of "ECU-004" for implementing the corresponding function 714 of "brake control" of the electric vehicle 5 is allocated, or the ECU 55 for controlling the entire manual driving function, disables the manual driving function (S807) and outputs a notification of disabling to the charging station management server 4 (S808).

Thereafter, the charge control unit 41 of the charging station management server 4 outputs a charging instruction to the charging facility 3 in response to the notification of disabling from the electric vehicle 5 (S809). In addition, the charging device 32 of the charging facility 3 outputs a charging notification to the electric vehicle 5 in response to an instruction of charging from the charging station management server 4, performs communication between the charging device 32 and the electric vehicle 5, and starts charging (S310).

Note that, in a case where the electric vehicle 5 can travel with another traveling function after disabling at least one traveling function having a security risk and the electric vehicle 5 can avoid the security risk, the charge control unit 41 may output, to the vehicle management server 6, instruction information for disabling at least one traveling function having a security risk (S806). In this case, the charge control unit 41 may permit charging to the electric vehicle 5 in a case of acquiring, from the electric vehicle 5, a notification (S808) that at least one traveling function having a security risk is disabled.

Note that, in the charging system 1 according to the present embodiment, the charge control unit 41 may be configured to cancel disabling of at least one traveling function having a security risk, that is, enable at least one traveling function in a case where the update is confirmed with reference to the vehicle management information 72b of the vehicle management server 6 under a condition that the latest FW when instructing to disable at least one traveling function having a security risk is applied. Alternatively, the electric vehicle 5 may be configured to hold information indicating the latest FW when at least one traveling function having a security risk is disabled and, in a case where the FW applied in the update of the FW matches the latest FW indicated by the held information, output a notification of the match to the charging station management server 4 or the vehicle management server 6. In this case, the charge control unit 41 of the charging station management server 4 may be configured to output, to the electric vehicle 5, an instruction to cancel disabling of the traveling function having a security risk in a case of confirming the notification, by the electric vehicle 5, of matching.

As described above, the charge control by the charging system 1 according to the present embodiment includes determining the presence or absence of a security risk in the traveling function of the electric vehicle 5 based on the vehicle software configuration information 71b, and determining whether the electric vehicle 5 to be charged can travel with another traveling function after disabling at least one traveling function having a security risk, which is at least one traveling function having a security risk, and the electric vehicle 5 can avoid the security risk. Then, in a case where the electric vehicle 5 can travel with another traveling function after disabling at least one traveling function having a security risk and the electric vehicle 5 can avoid the security risk, the charge control according to the present embodiment permits charging to the electric vehicle 5 after disabling at least one traveling function having the security risk.

According to this configuration, it is possible to disable the traveling function of the electric vehicle 5 having a security risk using the charging in the charging station as a trigger and secure the safety of the electric vehicle 5. According to the configuration in which the charging is permitted on condition that the traveling function having the security risk is disabled, the electric vehicle 5 can safely travel after obtaining the electric power after charging. In other words, the electric vehicle 5 connected to the charging facility 3 at the time of charging can be protected from the security risk caused by the electric vehicle 5.

Note that the technology according to the present embodiment can be appropriately applied to the charging system 1 according to each of the above-described embodiments.

### (Fifth Embodiment)

The charging system 1 according to the present embodiment is similar to the charging system 1 according to the fourth embodiment except that the charging process is started with a charge reservation as a trigger instead of vehicle detection. In other words, the difference between the charging system 1 according to the present embodiment and the charging system 1 according to the fourth embodiment is similar to the difference between the charging system 1a according to the first embodiment and the charging system 1 according to the third embodiment.

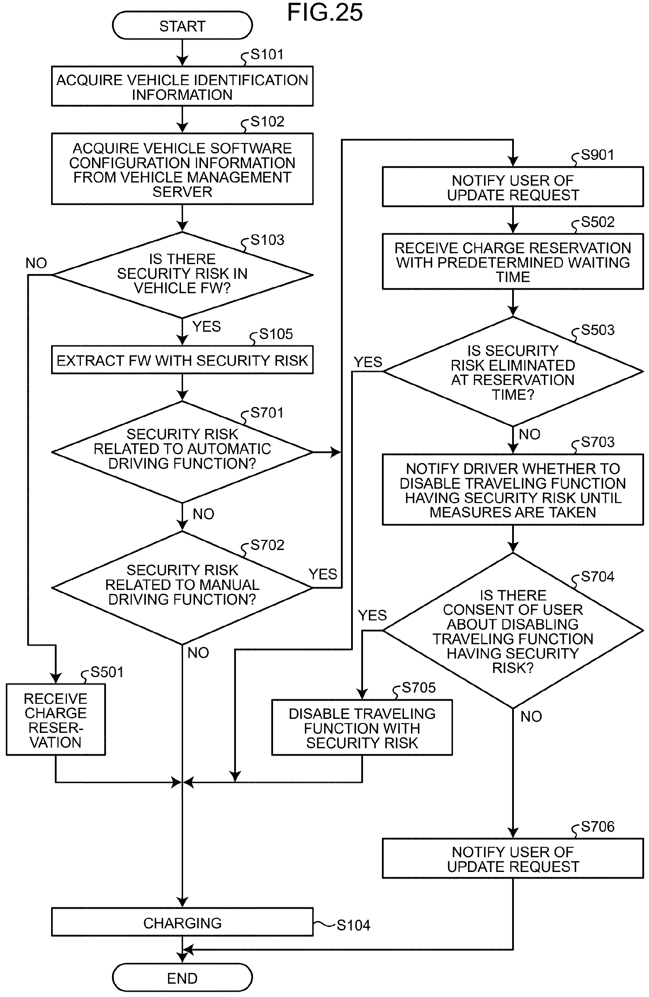

FIG. 25 is a flowchart illustrating an example of the charging process in a case where the charge reservation is used as a trigger, the process being executed by the charge control unit 41 and the reservation management unit 43 according to the fifth embodiment. Here, differences from the charging process (see FIG. 23) according to the fourth embodiment will be mainly described.

In the procedure of FIG. 25, in a case where it is determined that there is no security risk in the vehicle FW of the electric vehicle 5 (S103: No), the charge control unit 41 outputs a charging notification of permitting charging after the reservation management unit 43 receives the charge reservation (S501), thereby performing charging by the charging device 32 (S104).

In the procedure of FIG. 25, in a case where it is determined that the function includes the security risk related to the automatic driving function or the manual driving function (S701: Yes, S702: Yes), the charge control unit 41 notifies the user of the electric vehicle 5 of a request for update of the vehicle FW (S901). Thereafter, the reservation management unit 43 provides a predetermined waiting time and receives a charge reservation (S502). In other words, in a case where there is a security risk and in a case where the electric vehicle 5 to be charged can avoid the security risk, the reservation management unit 43 sets a reservation time at which charging is started with a predetermined waiting time provided. When the reservation time comes, the charge control unit 41 determines whether the security risk in the charging function has been eliminated (S503). In a case where it is determined that the security risk in the charging function has been eliminated (S503: Yes), the procedure of FIG. 25 proceeds to the process of S104. That is, the charge control unit 41 performs the first determination again by the reservation time and, in a case where the determination result of the first determination indicates that there is no security risk by the reservation time, permits charging to the electric vehicle 5 without disabling at least one traveling function having a security risk. On the other hand, in a case where it is not determined that the security risk in the charging function has been eliminated (S503: No), the procedure of FIG. 25 proceeds to the process of S703. That is, the charge control unit 41 performs the first determination again by the reservation time and, in a case where the determination result of the first determination does not indicate that there is no security risk by the reservation time, the charge control unit 41 permits charging to the electric vehicle 5 after disabling at least one traveling function having the security risk.

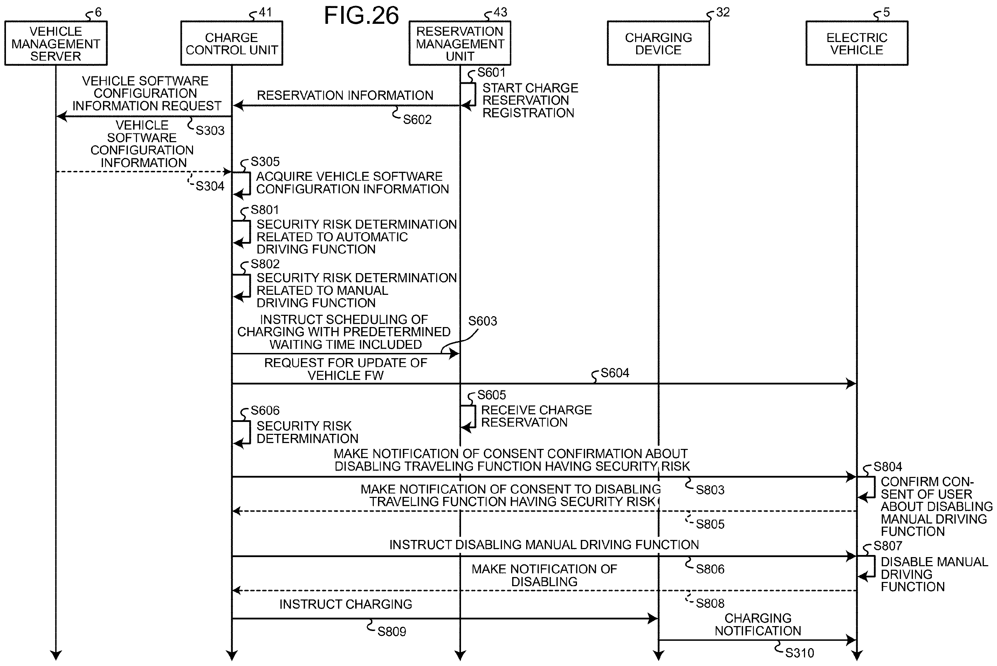

FIG. 26 is a sequence diagram illustrating an example of the charging process in a case where the charge reservation is used as a trigger, the process being executed by the charging system 1 according to the fifth embodiment. Here, differences from the charging process (see FIG. 24) according to the fourth embodiment will be mainly described.

The reservation management unit 43 starts the charge reservation registration (S601). In addition, the reservation management unit 43 acquires reservation information including at least the owner information 723 and the vehicle type 724 based on information input by the user of the electric vehicle 5 and authentication information when the user logs in the charge reservation registration service and outputs the reservation information to the charge control unit 41 (S602). Here, it is assumed that the reservation information including the owner information 723 of "Owner 002" and the vehicle type 724 of "Car-Model 02" is output.

The charge control unit 41 of the charging station management server 4 outputs a vehicle software configuration information request for requesting the vehicle software configuration information 71b and the vehicle management information 72b corresponding to the owner information 723 of "Owner 002" and the vehicle type 724 of "Car-Model 02", to the vehicle management server 6 (S303).

The information search unit 61 of the vehicle management server 6 refers to the vehicle management information 72b based on the owner information 723 of "Owner 002" and the vehicle type 724 of "Car-Model 02" as the vehicle identification information. Accordingly, the information search unit 61 identifies that the vehicle FW version 725 currently applied to the electric vehicle 5 to be charged is "Ver. 1.0".

In the security risk determination related to the automatic driving function (S801) and the security risk determination related to the manual driving function (S802), when it is determined that there is a security risk in the automatic driving function and the manual driving function, the charge control unit 41 instructs the reservation management unit 43 to schedule charging with a predetermined waiting time included (S603). In addition, the charge control unit 41 outputs a request for update of the vehicle FW to the electric vehicle 5 (S604) to request the driver to update the vehicle FW during a predetermined waiting time provided before the reservation time.

In response to an instruction from the charge control unit 41, the reservation management unit 43 receives a charge reservation at a reservation time with a predetermined waiting time provided (S605). When the reservation time comes, the charge control unit 41 determines whether the security risk in the traveling function has been eliminated (S606) and outputs a notification of consent confirmation about disabling the traveling function having a security risk to the electric vehicle 5 in response to the determination that the security risk in the traveling function has not been eliminated (S803).

As described above, the charging system 1 according to the present embodiment performs the charging process with the charge reservation as a trigger, and sets the reservation time with a waiting time in a case where it is determined that there is a security risk in the traveling function. According to this configuration, in addition to the effect similar to that of the fifth embodiment, an effect that the vehicle FW can be updated during the waiting time until the reservation time can be obtained. Therefore, according to the charging system 1 according to the present embodiment, the safety of the charge control can be further improved.

Note that the technology according to the present embodiment can be appropriately applied to the charging system 1 according to each of the above-described embodiments. Note that the charging system 1 according to the present embodiment can be expressed as applying the technology according to the third embodiment to the charging system 1 according to the fourth embodiment.

Note that, in each of the above-described embodiments, the determination as to "whether something is A" may be implemented by only determining that "something is A", may be implemented by only determining that "something is not A", or may be implemented by determining both of them.

The program executed by each device of the charging system 1 of the present embodiment is provided and recorded in a computer-readable recording medium such as a CD-ROM, an FD, a CD-R, or a DVD in a file in an installable format or an executable format.

In addition, the program executed by each device of the charging system 1 of the present embodiment may be stored on a computer connected to a network such as the Internet and provided by being downloaded via the network. In addition, the program executed by each device of the charging system 1 of the present embodiment may be provided or distributed via a network such as the Internet.

In addition, the program executed by each device of the charging system 1 of the present embodiment may be provided by being incorporated in a ROM or the like in advance.

According to at least one embodiment described above, it is possible to protect the charging facility connected to the electric vehicle at the time of charging from the security risk caused by the electric vehicle.

Although some embodiments of the present invention have been described, these embodiments have been presented as examples, and are not intended to limit the scope of the invention. These embodiments can be implemented in various other forms, and various omissions, substitutions, and changes can be made without departing from the gist of the invention. These embodiments and modifications thereof are included in the scope and gist of the invention and are included in the invention described in the claims and the equivalent scope thereof.

### (Supplementary Note)

The following technique is disclosed by the above description of the embodiments.
(A1) A charge control method used in a charge control device communicably connected to a charging facility that includes a charging device for charging an electric vehicle and a communication network connecting the charging device, the charge control method comprising:
   executing, based on software information including at least firmware information of at least one electronic control device installed in the electric vehicle,
      a first determination to determine presence or absence of a security risk in a charging function of the electric vehicle, the security risk being caused by firmware of the at least one electronic control device, and
      a second determination to determine whether the charging facility can avoid the security risk by restricting a function of the charging device;
   determining a restricted mode of restricting a function of the charging device based on a determination result of the second determination in a case where a determination result of the first determination indicates presence of the security risk; and
   controlling charging by the charging device to the electric vehicle in the determined restricted mode.
(A2) The charge control method according to (A1), wherein
   the second determination includes a determination as to whether the security risk is a first type of security risk that is avoided by disconnecting the charging device from the communication network, and
   the method further comprises, in a case where the security risk is the first type of security risk, controlling charging by the charging device to the electric vehicle in the restricted mode in which the charging device is disconnected from the communication network.
(A3) The charge control method according to (A1) or (A2), further comprising:
   setting a charging time at which charging is started after a predetermined waiting time in a case where a determination result of the first determination indicates presence of the security risk and in a case where the second determination indicates that the charging facility can avoid the security risk;
   executing the first determination again by the charging time;
   controlling charging to the electric vehicle without restricting a function of the charging device in a case where a determination result of the first determination indicates absence of the security risk by the charging time; and
   controlling charging by the charging device to the electric vehicle in the restricted mode in which the charging device is disconnected from the communication network in a case where the determination result of the first determination does not indicate absence of the security risk by the charging time.
(A4) The charge control method according to any one of (A1) to (A3), further comprising:
   verifying whether there is an unauthorized alteration of the charging device disconnected from the communication network;
   reconnecting the charging device to the communication network in a case where there is no unauthorized alteration;
   rolling back the charging device to further verify whether there is an unauthorized operation in a case where there is the unauthorized alteration; and
   reconnecting the charging device to the communication network in a case where there is no unauthorized operation.
(A5) The charge control method according to (A4), wherein the verifying whether there is the unauthorized alteration of the charging device disconnected from the communication network is executed after the charging device completes charging to the electric vehicle or after the charging device is not connected to the electric vehicle.
(A6) The charge control method according to any one of (A1) to (A5), further comprising:
   determining, in the first determination, presence or absence of a security risk in at least one traveling function of the electric vehicle based on the software information, the security risk being caused by firmware of the at least one electronic control device; and
   permitting charging by the charging device to the electric vehicle after disabling the predetermined function of the electric vehicle in a case where a determination result of the first determination indicates presence of a security risk in a predetermined function of the at least one traveling function and in a case where the security risk is avoided by disabling the predetermined function.
(A7) A charge control device communicably connected to a charging facility that includes a charging device for charging an electric vehicle and a communication network connecting the charging device, the charge control device comprising:
   a determination unit configured to execute, based on software information including at least firmware information of at least one electronic control device installed in the electric vehicle,
      a first determination to determine presence or absence of a security risk in a charging function of the electric vehicle, the security risk being caused by firmware of the at least one electronic control device, and
      a second determination to determine whether the charging facility can avoid the security risk by restricting a function of the charging device; and
   a control unit configured to
      determine a restricted mode of restricting a function of the charging device based on a determination result of the second determination in a case where a determination result of the first determination indicates presence of the security risk, and
      control charging by the charging device to the electric vehicle in the determined restricted mode.
(A8) A program causing a computer to execute processing, the computer being communicably connected to a charging facility that includes a charging device for charging an electric vehicle and a communication network connecting the charging device, the processing comprising:
   executing, based on software information including at least firmware information of at least one electronic control device installed in the electric vehicle,
      a first determination to determine presence or absence of a security risk in a charging function of the electric vehicle, the security risk being caused by firmware of the at least one electronic control device, and
      a second determination to determine whether the charging facility can avoid the security risk by restricting a function of the charging device;
   determining a restricted mode of restricting a function of the charging device based on a determination result of the second determination in a case where a determination result of the first determination indicates presence of the security risk; and
   controlling charging by the charging device to the electric vehicle in the determined restricted mode.
(B1) A charge control method used in a charge control device communicably connected to each of an electric vehicle and a charging device for charging the electric vehicle, the charge control method including:
   making,
   based on software information including at least firmware information of an electronic control device installed in the electric vehicle,
   a first determination to determine presence or absence of a security risk in a plurality of traveling functions of the electric vehicle, the security risk being caused by firmware of the electronic control device, and
   in a case where a determination result of the first determination indicates that there is a security risk, a second determination to determine whether the electric vehicle can travel in another traveling function among the traveling functions after disabling at least one traveling function having the security risk among the traveling functions and can avoid the security risk of the electric vehicle; and
   in a case where the electric vehicle can travel with the another traveling function after disabling the at least one traveling function and can avoid the security risk, permitting charging by the charging device to the electric vehicle after disabling the at least one traveling function.
(B2) The charge control method according to (B1), including:
   in a case where the electric vehicle can travel in the another traveling function after disabling the at least one traveling function and can avoid the security risk, outputting, to a driver, notification information indicating whether to disable the at least one traveling function; and
   in a case where notification information indicating consent to disabling the at least one traveling function is acquired from the driver, outputting instruction information for disabling the at least one traveling function to the electric vehicle.
(B3) The charge control method according to (B1) or (B2), including:
   in a case where a determination result of the first determination indicates that there is a security risk and in a case where the second determination indicates that the electric vehicle can avoid the security risk, setting a charging time at which charging is started with a predetermined waiting time provided;
   making the first determination again by the charging time;
   in a case where the determination result of the first determination indicates that there is no security risk by the charging time, permitting charging to the electric vehicle without disabling the at least one traveling function; and
   in a case where the determination result of the first determination does not indicate that there is no security risk by the charging time, permitting charging by the charging device to the electric vehicle after disabling the at least one traveling function.
(B4) The charge control method according to any one of (B1) to (B3), including:
   in a case where the electric vehicle can travel with the another traveling function after disabling the at least one traveling function and can avoid the security risk, outputting instruction information for disabling the at least one traveling function; and
   in a case where a notification indicating that the at least one traveling function is disabled is acquired from the electric vehicle, permitting charging by the charging device to the electric vehicle.
(B5) The charge control method according to any one of (B1) to (B4), including:
   in the first determination, further determining presence or absence of a security risk in a charging function of the electric vehicle, the security risk being caused by firmware of the electronic control device, based on the software information;
   in a case where a determination result of the first determination indicates that there is the security risk in the charging function and in a case where the security risk can be avoided by restricting a function of the charging device, determining a restricted mode of restricting the function of the charging device according to a type of the security risk; and
   controlling charging by the charging device to the electric vehicle in the determined restricted mode.
(B6) A charge control device communicably connected to each of an electric vehicle and a charging device for charging the electric vehicle, the charge control device including:
   a determination unit that makes,
   based on software information including at least firmware information of an electronic control device installed in the electric vehicle,
   a first determination to determine presence or absence of a security risk in a plurality of traveling functions of the electric vehicle, the security risk being caused by firmware of the electronic control device, and
   in a case where a determination result of the first determination indicates that there is a security risk, a second determination to determine whether the electric vehicle can travel in another traveling function among the traveling functions after disabling at least one traveling function having the security risk among the traveling functions and can avoid the security risk of the electric vehicle; and
   a control unit that, in a case where the electric vehicle can travel with the another traveling function after disabling the at least one traveling function and can avoid the security risk, permits charging by the charging device to the electric vehicle after disabling the at least one traveling function.
(B7) A program for causing a computer communicably connected to each of an electric vehicle and a charging device for charging the electric vehicle to execute:
   making,
   based on software information including at least firmware information of an electronic control device installed in the electric vehicle,
   a first determination to determine presence or absence of a security risk in a plurality of traveling functions of the electric vehicle, the security risk being caused by firmware of the electronic control device, in a case where a determination result of the first determination indicates that there is a security risk, and
   a second determination to determine whether the vehicle can travel in another traveling function among the traveling functions after disabling at least one traveling function having the security risk among the traveling functions and can avoid the security risk of the electric vehicle; and
   in a case where the electric vehicle can travel with the another traveling function after disabling the at least one traveling function and can avoid the security risk, permitting charging by the charging device to the electric vehicle after disabling the at least one traveling function.
(C1) A recording medium (Computer Program Product) on which a program according to (A8) or (B7) is recorded, the program being executed by a computer.

### EXPLANATIONS OF LETTERS OR NUMERALS

1 Charging system
3 Charging facility
31 Charging station management terminal
311 Detection unit
312 first communication control unit
313 Charging device management unit
32 Charging device
33 Facility communication network
34 Verification network
301 Connection member
4 Charging station management server
41 Charge control unit
411 First determination unit
412 Second determination unit
413 Charge control instruction unit
414 Storage control unit
415 Second communication control unit
416 First verification unit
417 Second verification unit
42 First storage unit
43 Reservation management unit
44 Display unit
45 First communication unit
5 Electric vehicle
51 In-vehicle network
53 External communication I/F
54 Charging I/F
55 ECU
6 Vehicle management server
61 Information search unit
62 Second communication unit
63 Second storage unit
N External network

## Claims

1. A charge control method used in a charge control device communicably connected to a charging facility that includes a charging device for charging an electric vehicle and a communication network connecting the charging device, the charge control method comprising:
executing, based on software information including at least firmware information of at least one electronic control device installed in the electric vehicle,
a first determination to determine presence or absence of a security risk in a charging function of the electric vehicle, the security risk being caused by firmware of the at least one electronic control device, and
a second determination to determine whether the charging facility can avoid the security risk by restricting a function of the charging device;
determining a restricted mode of restricting a function of the charging device based on a determination result of the second determination in a case where a determination result of the first determination indicates presence of the security risk; and
controlling charging by the charging device to the electric vehicle in the determined restricted mode.

2. The charge control method according to claim 1, wherein
the second determination includes a determination as to whether the security risk is a first type of security risk that is avoided by disconnecting the charging device from the communication network, and
the method further comprises, in a case where the security risk is the first type of security risk, controlling charging by the charging device to the electric vehicle in the restricted mode in which the charging device is disconnected from the communication network.

3. The charge control method according to claim 1, further comprising:
setting a charging time at which charging is started after a predetermined waiting time in a case where a determination result of the first determination indicates presence of the security risk and in a case where the second determination indicates that the charging facility can avoid the security risk;
executing the first determination again by the charging time;
controlling charging to the electric vehicle without restricting a function of the charging device in a case where a determination result of the first determination indicates absence of the security risk by the charging time; and
controlling charging by the charging device to the electric vehicle in the restricted mode in which the charging device is disconnected from the communication network in a case where the determination result of the first determination does not indicate absence of the security risk by the charging time.

4. The charge control method according to claim 2 or 3, further comprising:
verifying whether there is an unauthorized alteration of the charging device disconnected from the communication network;
reconnecting the charging device to the communication network in a case where there is no unauthorized alteration;
rolling back the charging device to further verify whether there is an unauthorized operation in a case where there is the unauthorized alteration; and
reconnecting the charging device to the communication network in a case where there is no unauthorized operation.

5. The charge control method according to claim 4, wherein the verifying whether there is the unauthorized alteration of the charging device disconnected from the communication network is executed after the charging device completes charging to the electric vehicle or after the charging device is not connected to the electric vehicle.

6. The charge control method according to claim 1, further comprising:
determining, in the first determination, presence or absence of a security risk in at least one traveling function of the electric vehicle based on the software information, the security risk being caused by firmware of the at least one electronic control device; and
permitting charging by the charging device to the electric vehicle after disabling the predetermined function of the electric vehicle in a case where a determination result of the first determination indicates presence of a security risk in a predetermined function of the at least one traveling function and in a case where the security risk is avoided by disabling the predetermined function.

7. A charge control device communicably connected to a charging facility that includes a charging device for charging an electric vehicle and a communication network connecting the charging device, the charge control device comprising:
a determination unit configured to execute, based on software information including at least firmware information of at least one electronic control device installed in the electric vehicle,
a first determination to determine presence or absence of a security risk in a charging function of the electric vehicle, the security risk being caused by firmware of the at least one electronic control device, and
a second determination to determine whether the charging facility can avoid the security risk by restricting a function of the charging device; and
a control unit configured to
determine a restricted mode of restricting a function of the charging device based on a determination result of the second determination in a case where a determination result of the first determination indicates presence of the security risk, and
control charging by the charging device to the electric vehicle in the determined restricted mode.

8. A program causing a computer to execute processing, the computer being communicably connected to a charging facility that includes a charging device for charging an electric vehicle and a communication network connecting the charging device, the processing comprising:
executing, based on software information including at least firmware information of at least one electronic control device installed in the electric vehicle,
a first determination to determine presence or absence of a security risk in a charging function of the electric vehicle, the security risk being caused by firmware of the at least one electronic control device, and
a second determination to determine whether the charging facility can avoid the security risk by restricting a function of the charging device;
determining a restricted mode of restricting a function of the charging device based on a determination result of the second determination in a case where a determination result of the first determination indicates presence of the security risk; and
controlling charging by the charging device to the electric vehicle in the determined restricted mode.
